# EUROPEAN PATENT APPLICATION

(11) **EP 1 355 473 A2**
(43) Date of publication of application: **22.10.2003**
(21) Application number: 03252245.0
(22) Date of filing: 09.04.2003
(51) Int. Cl.: H04L 29/06, H04L 12/56

(54) **Service control network and its control method**

(30) Priority: 16.04.2002 JP 2002113830
(71) Applicant: FUJITSU LIMITED, Kawasaki-shi, Kanagawa 211-8588 (JP)
(72) Inventor: Ushiki, Kazumasa, c/o Fujitsu Limited, Kawasaki-shi, Kanagawa 211-8588 (JP); Kakemizu, Mitsuaki, c/o Fujitsu Limited, Kawasaki-shi, Kanagawa 211-8588 (JP); Igarashi, Yoichiro, c/o Fujitsu Limited, Kawasaki-shi, Kanagawa 211-8588 (JP); Taniguchi, Hiroyuki, c/o Fujitsu Limited, Kawasaki-shi, Kanagawa 211-8588 (JP); Yamamura, Shinya, c/ Fujitsu Nishi-Nihon Communi., Sawara-ku, Fukuoka-shi, Fukuoka 814-8588 (JP)
(74) Representative: Williams, Michael Ian

(57) **Abstract**

The present invention relates to an IP network including mobile environment and, in particular, to a service control network and its control method for providing individual service to every user or terminal of an IP network. In a service control network including a service control device (3) for performing Layer-7 service control for mobile terminals, an authentication server device (4) specifies a Layer-7 profile and an associated dependent Layer-3 profile of a mobile terminal (1) at the success of the authentication of the mobile terminal. An edge device (5) transfers packets, which have been received from the mobile terminal (1) after the success of the authentication of the mobile terminal and match the dependent Layer-3 profile, to the service control device (3). The service control device controls the implementation of a Layer-7 service for packets which have been received from the edge device and match the Layer-7 profile.

## Description

The present invention relates to an IP network including a mobile environment and, in particular, to a service network and a control method for providing individual service to every user or terminal of an IPv6 network.

In recent years, various kinds of terminals performing audio and/or data communication have been connected to an IP network including a mobile environment, and service providers have come to provide different service to every user under contract with each user. For example, QoS (Quality of Service) for assuring predetermined communication quality to every user, DiffServ (Differentiated Service) for transferring packets for particular users on a priority basis according to priorities assigned to packets, etc. have been provided.

In each case, service control information for a terminal is distributed from a server which controls a predetermined network to an edge node to which the terminal is connected, and the edge node provides the above service, etc., based on the service control information cached by it. Furthermore, among different networks, service control information for the terminals concerned is distributed to edge nodes in the networks through gateways or the like, and the edge nodes provide the above service, etc., by transferring the necessary service control information to the communication partner.

However, the aforementioned QoS, Diff-Serve, or the like is a network layer service (called "Layer-3 service" hereinafter) using IP packets, and an application layer service (called "Layer-7 service" hereinafter), such as an English-to-Japanese translation service, future demand for which is expected, can not be provided sufficiently through the present networks.

Furthermore, the Layer-3 service between different networks has been possible, but the new Layer-7 service has had a problem in that its service area is restricted to a predetermined area. For example, there has been a problem that English-to-Japanese translation service or the like provided for users of home networks is not provided to users who have moved to an external network through which the service is not provided.

By the way, a protocol for processing content called ICAP (Internet Content Adaptation Protocol) has been proposed by IETF. When this protocol is used, an ICAP server function corresponding to a content processing server function can be provided for optional devices, and thereby a more flexible content processing network can be constructed.

However, there has been a problem that as ICAP is a protocol with which an ICAP server and an ICAP client communicate, various flexible and efficient content processing services as required under the Layer-7 service environment cannot be provided using only ICAP. For this reason, there also has been a problem that service providers cannot get into the Layer-7 service market.

It is therefore desirable to provide a service control network and a control method capable of providing Layer-7 service in addition to conventional Layer-3 service.

It is also desirable to provide a service control network and a control method for allowing a mobile user to obtain Layer-7 service through the network to which the user has moved, as through the home network of the user, without considering the network that the user is utilizing.

It is also desirable to provide a service control network and its control method for performing various flexible and efficient content processing under Layer-7 service environment and allowing service providers to get into a Layer-7 service market easily.

The present invention provides a service control network comprising an authentication server device for performing user authentication, an edge device for performing Layer-3 service processing for a mobile terminal managed by that edge device, and a service control device for performing Layer-7 service control for that mobile terminal, wherein that authentication server device comprises a means for specifying a Layer-7 profile and an associated Layer-3 profile of that mobile terminal at the success of the authentication of that mobile terminal, the edge device comprising a means for transferring packets, which have been received from that mobile terminal after the success of the authentication of that mobile terminal and match that Layer-3 profile, to that service control device, the service control device comprising a means for controlling the implementation of Layer-7 service concerned for packets which have been received from that edge device and match that Layer-7 profile.

Three kinds of service control devices, that is, tightly edge-coupled service control device, loosely edge-coupled service control device, and function-dependent service control device are provided, and thereby flexible, economical, and different Layer-7 services are provided. The aforementioned authentication server device is provided with a Layer-7 service managing means for managing a Layer-7 profile for every mobile terminal.

Preferred features of the present invention will be more clearly understood from the description as set forth below with reference to the accompanying drawings, in which:
Fig.1 shows a basic configuration of a service control network according to the present invention.
Fig.2 shows basic configurations of the edge devices shown in Fig.1.
Fig.3 shows more detail configurations of the service control device and the authentication server device shown in Fig.2.
Fig.4 shows a first embodiment of the present invention.
Fig.5 shows an example of an operation sequence of the first embodiment.
Fig.6 shows an example of a service control device management table.
Fig.7 shows an example of a service management table.
Fig.8 shows an example of a service control device address management table.
Fig.9 shows an example of a profile of a mobile terminal.
Fig.10 shows an example of a configuration of a dependent Layer-3 profile.
Fig.11 shows a specific example of a dependent Layer-3 profile.
Fig.12 shows an example of an independent Layer-3 profile of a transmitter.
Fig.13A shows an example (1) of an independent Layer-3 profile of a transmitter.
Fig.13B shows an example (2) of an independent Layer-3 profile of a transmitter.
Fig.14 shows a second embodiment of the present invention.
Fig.15 shows an operation sequence of the second embodiment.
Fig.16 shows an example of a Layer-7 profile.
Fig.17 shows an example of an independent Layer-3 profile of a transmitter.
Fig.18 shows a third embodiment of the present invention.
Fig.19 shows an operation sequence of the third embodiment.
Fig.20 shows a fourth embodiment of the present invention.
Fig.21 shows an operation sequence of the fourth embodiment.
Fig.22 shows a fifth embodiment of the present invention.
Fig.23 shows an operation sequence of the fifth embodiment.
Fig.24 shows an example of a dependent Layer-3 profile.
Fig.25 shows a control flow of the authentication client section of an edge device.
Fig.26 shows a control flow (1) of the service basic processing section of an edge device.
Fig.27 shows a control flow (2) of the service basic processing section of an edge device.
Fig.28 shows a control flow (3) of the service basic processing section of an edge device.
Fig.29 shows a control flow (4) of the service basic processing section of an edge device.
Fig.30 shows a control flow of the L3 profile managing section.
Fig.31 shows a control flow (1) of the service control device managing section of an edge device.
Fig.32 shows a control flow (2) of the service control device managing section of an edge device.
Fig.33 shows a control flow (1) of the authentication proxy section of a service control device.
Fig.34 shows a control flow (2) of the authentication proxy section of a service control device.
Fig.35 shows a control flow (1) of the service basic processing section of a service control device.
Fig.36 shows a control flow (2) of the service basic processing section of a service control device.
Fig.37 shows a control flow (3) of the service basic processing section of a service control device.
Fig.38 shows a control flow (4) of the service basic processing section of a service control device.
Fig.39 shows a control flow (1) of the service switching section of a service control device.
Fig.40 shows a control flow (2) of the service switching section of a service control device.
Fig.41 shows a control flow (1) of the service control section of a service control device.
Fig.42 shows a control flow (2) of the service control section of a service control device.
Fig.43 shows a control flow of the service implementing section of a service control device.
Fig.44 shows a control flow (1) of the authentication server section of an authentication server device.
Fig.45 shows a control flow (2) of the authentication server section of an authentication server device.
Fig.46 shows a control flow (1) of the profile transfer section of an authentication server device.
Fig.47 shows a control flow (2) of the profile transfer section of an authentication server device.
Fig.48 shows a control flow (3) of the profile transfer section of an authentication server device.
Fig.49 shows a control flow (4) of the profile transfer section of an authentication server device.
Fig.50 shows a control flow (5) of the profile transfer section of an authentication server device.
Fig.51 shows a control flow (6) of the profile transfer section of an authentication server device.
Fig.52 shows a control flow of the service managing section of an authentication server device.

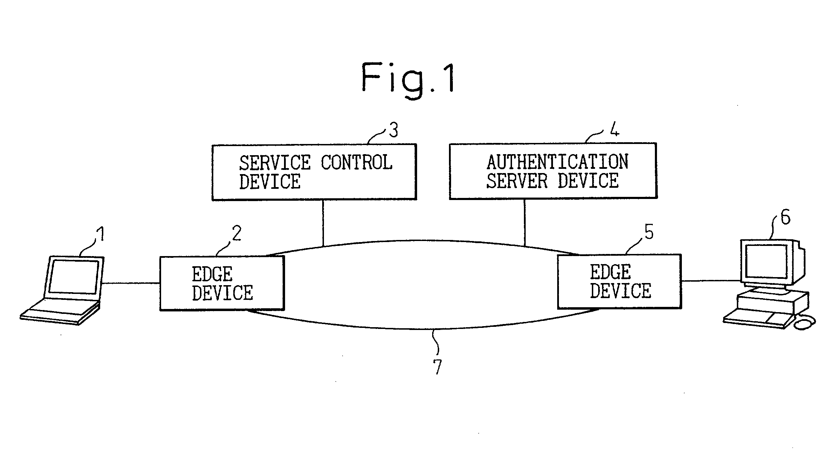

Fig.1 shows a basic configuration of a service control network according to the present invention.

In Fig.1, a mobile terminal device 1 is moved and connected to an edge device 2 in an IP network 7. A fixed terminal device 6 is also connected to the IP network 7 through an edge device 5. The mobile terminal device 1 is a data communication terminal such as a mobile telephone or a notebook-sized PC, and the fixed terminal device 6 is a Web server device, a database device, an ordinary personal computer, or the like.

The IP network 7 is the Internet or an IP network operated by a carrier or the like, and an IPv6 network is adopted as the IP network 7 in the present invention. The edge device 2 and the edge device 5 are configured with routers, etc. which manage a predetermined area (domain area) in the IP network 7.

In the present invention, the edge device 2, when a new mobile terminal device 1 is connected, gives an IP address to the mobile terminal device 1 at first, and then transmits a user authentication request, to which the IP address and a NAI (Network Access Identifier) uniquely defining every terminal, which have been received from the mobile terminal device 1, are added, to a service control device 3 having a predetermined relation with the edge device 2.

The service control device 3 transmits the received user authentication request to an authentication server device 4 as it is. The authentication server device 4 accepts the user authentication request from the service control device 3, and then performs an authentication processing for the user. When the user authentication has succeeded, the authentication server device 4 according to the present invention transmits the Layer-3 profile and the Layer-7 profile of the user with a notice of the success of the user authentication, to the service control device 3.

The service control device 3 caches the Layer-7 profile required at the time when providing Layer-7 service to the user, and transmits the above notice and a conventional Layer-3 profile to the edge device 2. The edge device 2 transmits a notice saying that the user authentication has been succeeded, to the mobile terminal device 1, and caches the received Layer-3 profile.

After that, the edge device 2 starts a Layer-3 service, such as QoS or Diff-Serv, for every user based on the cached Layer-3 profile as before. In addition, in a predetermined case, the service control device 3 is provided on the communication path between the edge device 2 which is a transmitter, and the edge device 5 which is a destination, and the service control device 3 provides, based on a Layer-7 profile cached beforehand, a Layer-7 service such as English-to-Japanese translation service to which the user has subscribed, when performing the communication concerned.

In this case, the edge device 2 transfers packets, which have been transmitted by the mobile terminal device 1 and satisfy a predetermined condition notified by the authentication server device 4, to the service control device 3, which interprets the Layer-7 service information of the received packets and performs the service concerned when the Layer-7 service information satisfies the service starting condition of the service control device 3.

The predetermined condition is an individual condition such as a source IP address, a destination IP address, a source port number, or a destination port number, or a combination of some of them. When the edge device 2 starts to communicate with the destination edge device 5, the processing of transferring a Layer-3 profile necessary for providing Layer-3 service is performed between the edge device 2 and the edge device 5 as before.

As described above, in the present invention, when authentication of a user is performed, the service control device 3 caches a Layer-7 profile of the user for a Layer-7 service to which the user has subscribed, and the edge device 2 caches a Layer-3 profile of the user for a Layer-3 service to which the user has subscribed. Thus, a Layer-3 service between the edge device 2 and the edge device 5 is implemented as before and, in a certain case, the service control device 3 is provided on a communication path between the both edge devices to provide a new Layer-7 service.

Consequently, it is not required to restrict the service area of the service control device 3 in the IP network 7 and, even if the mobile terminal device 1 has moved to a network which is not providing a Layer-7 service and utilizing it, a Layer-7 service to which the user of the mobile terminal device 1 has subscribed may be provided to the user. Furthermore, several kinds of service control devices described below allow flexible and efficient service networks.

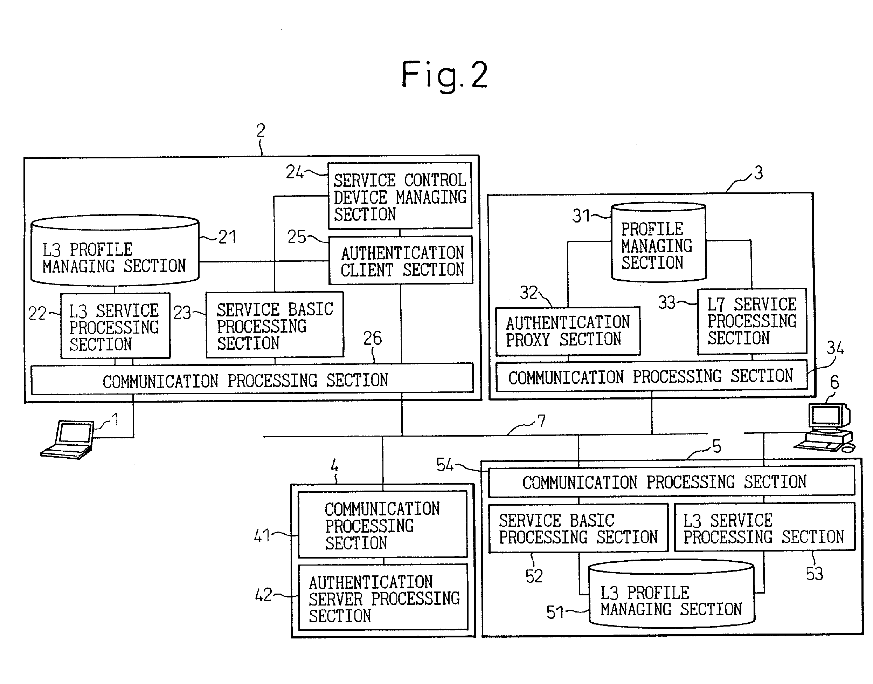

Fig.2 shows basic configurations of devices constituting the service control network shown in Fig.1.

In Fig.2, the edge device 2 has a router function, and the service basic processing section 23 of the router implements basic service such as routing processing through the communication processing section 26 having an interface to the IP network 7. The authentication client section 25 accepts an authentication request from the mobile terminal device 1, and communicates with the authentication server device 4 according to the authentication request.

The L3-profile managing section 21 stores and manages Layer-3 profiles cached from the authentication server device 4. The L3-service processing section 22 performs Layer-3 service processing based on the cached Layer-3 profiles. The service control device managing section 24 stores and manages information regarding the service control device 3 described next. The edge device 5 has the processing sections 51 to 54 which are basically identical with the above. However, as a fixed terminal device 6 such as a Web server is connected to the edge device 5, processing sections like the sections 24 and 25 of the edge device 2 related to authentication are not provided.

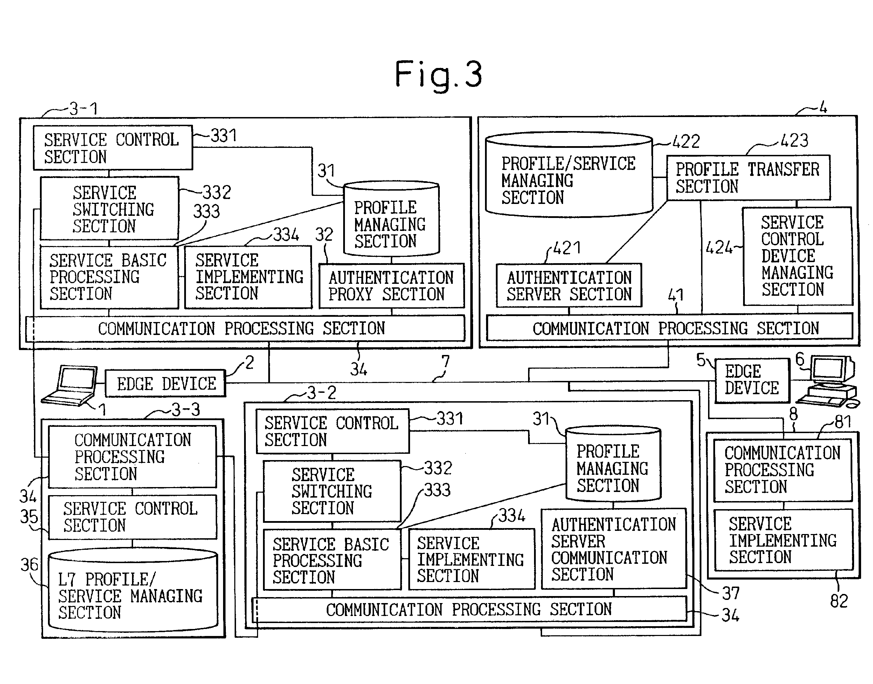

The service control device 3 provides a Layer-7 service. The service control device 3 according to the present invention is configured in three types described with reference with Fig.3, but Fig.2 shows only a tightly edge-coupled service control device which is a typical service control device. The profile managing section 31 of the service control device 3 stores and manages Layer-7 profiles and independent Layer-3 profiles cached from the authentication server device 4. The L7-service processing section 33 performs Layer-7 service processing based on the cached Layer-7 profiles. The authentication proxy section 32 relays control signals for authentication transferred between the edge device 2 and the authentication server device 4.

The authentication server device 4 performs authentication processing for the mobile terminal devices 1 connected to the edge device 2 based on the stored authentication information. The authentication server processing section 42 keeps Layer-3 profiles and Layer-7 profiles of mobile terminal devices 1 in addition to the authentication information. The authentication server processing section 42 accepts an authentication request from the edge device 2 relayed by the authentication proxy section 32 of the service control device 3, and then attaches the Layer-3 profile and Layer-7 profile of a mobile terminal device concerned to the notification of the success of the authentication, and transmits them to the service control device 3.

Fig.3 shows more detail block configurations of the service control device and the authentication server device shown in Fig.2.

As shown in Fig.3, there are three types of service control devices 3 according to the present invention, that is, a tightly edge-coupled service control device 3-1, a loosely edge-coupled service control device 3-2, and a function-dependent service control device 3-3.

The tightly edge-coupled service control device is a service control device which provides a Layer-7 service, in conjunction with one or more particular edge devices which are allowed to have a logical connection relation, to users managed by the edge devices. In Fig.3, the tightly edge-coupled service control device 3-1 provides a Layer-7 service in conjunction with a particular edge device 2.

The loosely edge-coupled service control device is a service control device allowed to have a logical connection relation to all edge devices, and provides Layer-7 service, in conjunction with the edge devices, to users managed by the edge devices.

In Fig.3, the loosely edge-coupled service control device 3-2 provides a Layer-7 service, also in conjunction with other edge devices (not shown) such as a edge device 5, to users managed by the edge devices, without restricting to the edge device 2.

The function-dependent service control device is a service control device which provides a Layer-7 service, in conjunction with tightly edge-coupled service control devices and/or loosely edge-coupled service control devices, to users managed by edge devices having a logical connection relation with the service control devices. In Fig.3, the function-dependent service control device 3-3 provides a Layer-7 service, in conjunction with the tightly edge-coupled service control device 3-1 and the loosely edge-coupled service control device 3-2, to users managed by the edge device 2 etc., having a logical connection relation with the service control devices 3-1 and 3-2.

In the tightly edge-coupled service control device 3-1, the L7-service processing section 33 shown in Fig.2 consists of a service control section 331, a service switching section 332, a service basic processing section 333, and a service implementing section 334. The service control section 331 controls Layer-7 service while referring to Layer-7 profiles in the profile managing section 31.

The service switching section 332 has a function of making a connection with the service basic processing section 333 described next, and controls the service basic processing section 333 and determines whether the starting condition for a Layer-7 service has been satisfied, based on a service control request from the service control section 331.

The service basic processing section 333 builds up Layer-7 information from packets received from the communication processing section 34, notifies the Layer-7 information to the service switching section 332, and divides Layer-7 information notified from the service switching section 332 into packets to output them to the communication processing section 34. The service implementing section 334 implements an actual Layer-7 service in conjunction with the service basic processing section 333.

Configuration of each section of the loosely edge-coupled service control device 3-2 is identical with that of the tightly edge-coupled service control device 3-1 described above. However, the loosely edge-coupled service control device 3-2 targets all of the edge devices of the IP network 7, and thereby it is not required to distribute a profile to the service control device dynamically every time a mobile terminal is authenticated. For this reason, the authentication server communication section 37 communicating with the authentication server device 4, obtains necessary profiles from the authentication server device 4, and notifies information about itself to the authentication server device 4.

Furthermore, configuration of each of the sections of the function-dependent service control device 3-3 is, in principle, identical with that of the tightly edge-coupled service control device 3-1 or the loosely edge-coupled service control device 3-2. However, the function-dependent service control device 3-3 is so configured that it provides only some useful functions effectively without having all of their functions.

In Fig.3, the function-dependent service control device 3-3 depends on the tightly edge-coupled service control device 3-1 in functions related to authentication processing, while being provided with a service control section 35 and a L7-profile/service managing section 36 having a function limited to a Layer-7 service in order to provide many different Layer-7 service to more users. The service control section 35 shown in Fig.3 functions like the service control section 331 described above and controls a Layer-7 service while referring to Layer-7 profiles in the L7-profile/service managing section 36.

Next, concerning the authentication server device 4, the authentication server processing section 42 shown in Fig.2 consists of an authentication server section 421, a profile/service managing section 422, a profile transferring section 423, and a service control device managing section 424. The authentication server 421 keeps information necessary for user authentication and performs user authentication processing. The profile/service managing section 422 keeps information about service, Layer-7 profiles, independent-type Layer-3 profiles, and dependent-type Layer-3 profiles. The difference between independent-type and dependent-type will be described later.

The profile transferring section 423 analyzes profiles to be transmitted to the tightly edge-coupled service control device 3-1 and the loosely edge-coupled service control device 3-2, and transfers Layer-7 profiles to the loosely edge-coupled service control device 3-2. The service control device managing section 424 manages information related to the tightly edge-coupled, loosely edge-coupled, and function-dependent service control devices. Lastly, the service implementing server device 8 added in Fig.3 will be described briefly. The service implementing server device 8 is an application server provided for providing Layer-7 service on the IP network 7. As an example, the service implementing section 82 of the service implementing server device 8 receives an English-to-Japanese translation request from the tightly edge-coupled service control device 3-1, and then starts the processing of English-to-Japanese translation and transmits the result of the processing to the tightly edge-coupled service control device 3-1.

In the following descriptions, the first to fifth embodiments of the present invention are discussed first. After that, detail control flows of the above sections (processing functions), which realize these embodiments, are discussed.

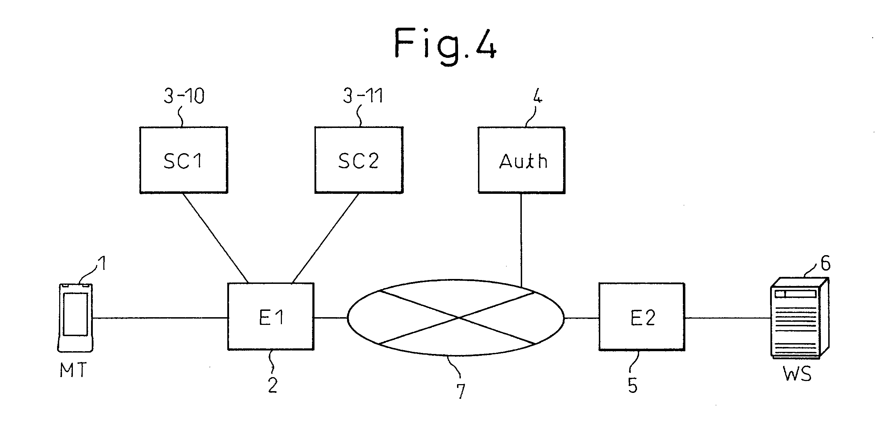

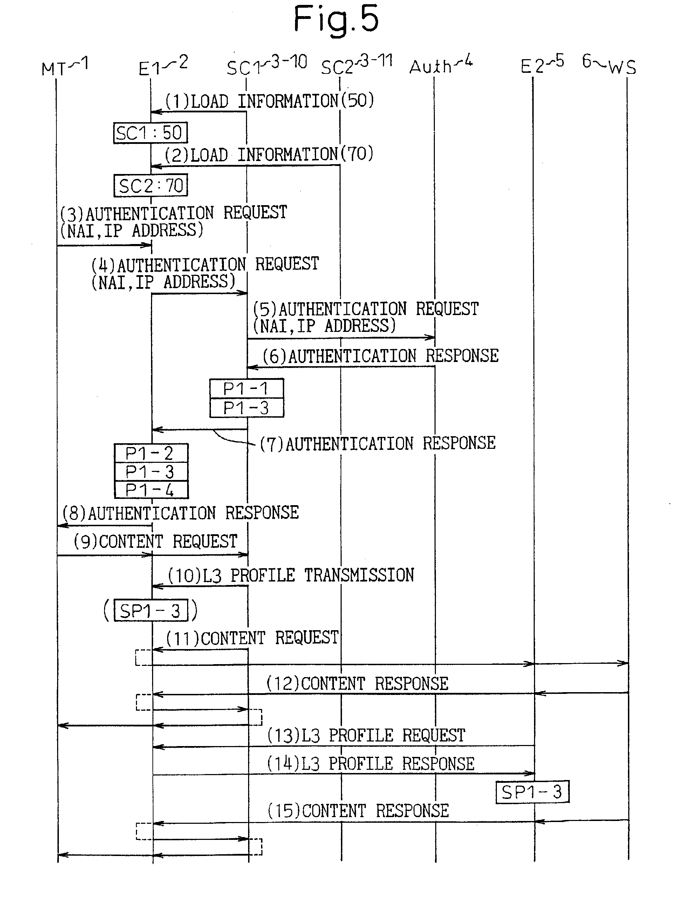

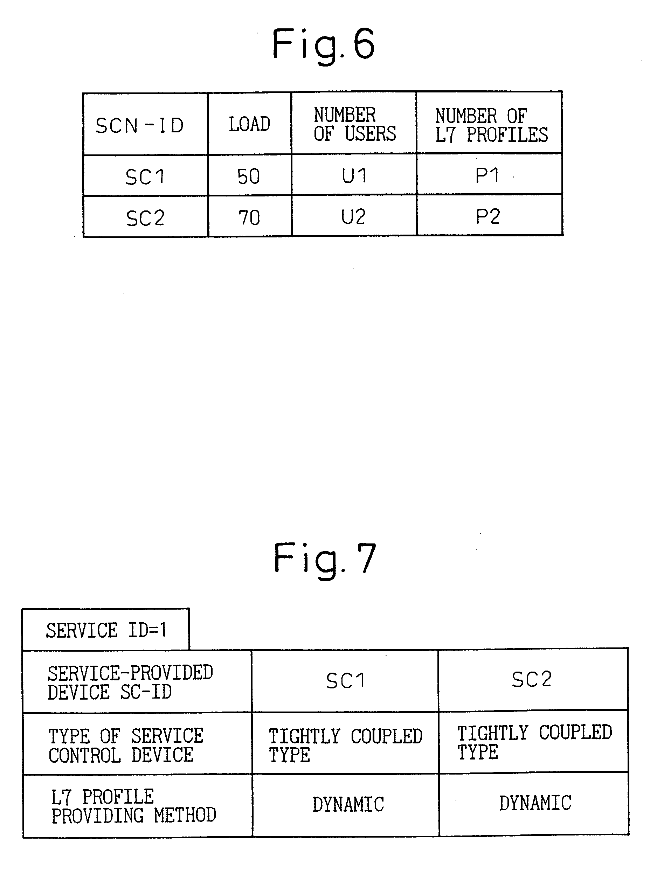

Figs.4 to 13b show a first example of the present invention. Fig.4 shows a first example configuration of a service control network according to the present invention, Fig.5 shows an operation sequence of it, and Figs.6 to 13B show an example of service profiles, etc.

In a specific example shown in Fig.4 of the service control network shown in Fig.1, a mobile terminal (MT) 1, edge devices (E1 and E2) 2 and 5, a Web server device (WS) 6, an authentication server device (Auth) 4, tightly edge-coupled service control devices (SC1 and SC2) 3-10 and 3-11, and Internet 7 are used. The feature of this example is that the tightly edge-coupled service control devices 3-10 and 3-11 operating in conjunction with the particular edge device 2 are provided.

Each of the tightly edge-coupled service control devices 3-10 and 3-11 is directly connected to the edge device 2 without going through the Internet 7 and, thereby, all communication between the tightly edge-coupled service control device 3-10 or 3-11 and an external device is performed through the edge device 2. The mobile terminal 1 has "mt@domainX" as an NAI (Network Access Identifier), and the user of it has subscribed to URL filtering service of a Layer-7 service, and Diff-Serv of a Layer-3 service.

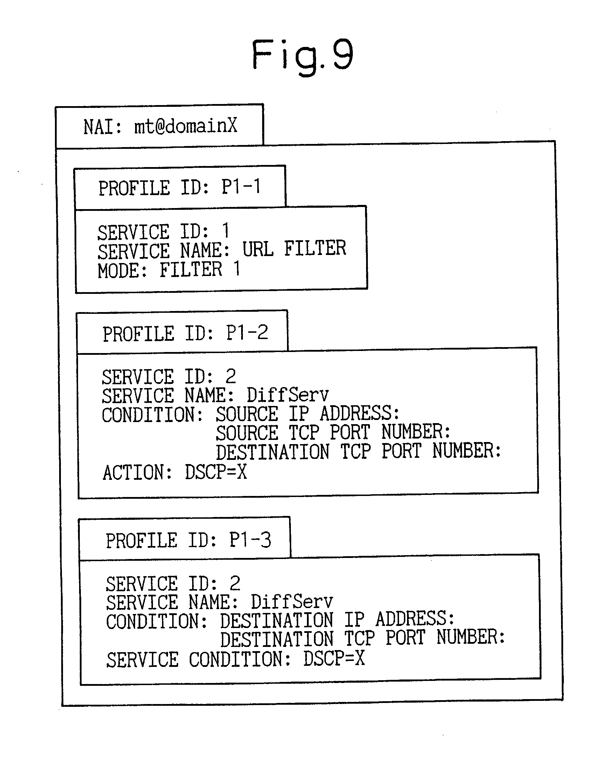

The operation of the first embodiment is described below with reference to Fig.5. In the following embodiment, description is made respectively to the operation of implementing a Layer-7 service only, the operation of implementing a Layer-7 service and a Layer-3 service operated in conjunction with each other, and the operation of implementing Layer-3 service only.
(1) The tightly edge-coupled service control device 3-10 periodically notifies the present load status to the particular edge device 2 capable of operating in conjunction with it. In addition, the tightly edge-coupled service control device 3-10 notifies the number of registered users and the number of registered Layer-7 profiles managed by the edge device 2 to the edge device 2 using the same signal. According to the above notification, the edge device 2 creates a tightly edge-coupled service control device management table as shown in Fig.6 and renews it.
(2) Like the tightly edge-coupled service control device 3-10, the tightly edge-coupled service control device 3-11 periodically notifies the present load status to the particular edge device 2 capable of operating in conjunction with it. According to the above notification, the edge device 2 add the tightly edge-coupled service control device 3-11 to the tightly edge-coupled service control device management table. In the example shown in Fig.6, the load (50) of the tightly edge-coupled service control device 3-10 is smaller than the load (70) of the tightly edge-coupled service control device 3-11.
(3) Next, when the mobile terminal 1 has been moved and is managed by the edge device 2, the edge device 2 assigns an IF address (Addr(MT)) to the mobile terminal 1. The mobile terminal 1 transmits an authentication request message including its NAI (mt@domainX) and the aforementioned IP address to the edge device 2.
(4) The edge device 2 refers to the aforementioned tightly edge-coupled service control device management table, and selects the tightly edge-coupled service control device 3-10 having a smaller load based on the load information in the table. The edge device 2 then transmits the aforementioned authentication request message to the selected tightly edge-coupled service control device 3-10.
(5) The tightly edge-coupled service control device 3-10 receives the authentication request message, and then transmits an authentication request message, in which a service control device identifier SC-ID (= SC1) of a transmitter is further set, to the authentication server device 4 managing the mobile terminal 1.
(6) The authentication server device 4 performs authentication processing for the mobile terminal 1 when receiving the aforementioned authentication request message. When succeeding the authentication, the authentication server device 4 retrieves the profile (see Fig.9) of the mobile terminal 1 using the NAI (mt@domainX) of the mobile terminal as a keyword. In the example shown in Fig.9, it is understood that the user of the mobile terminal 1 has subscribed to a URL filtering service (service ID = 1) which is a Layer-7 service, and a DiffServ (service ID = 2) which is a Layer-3 service.

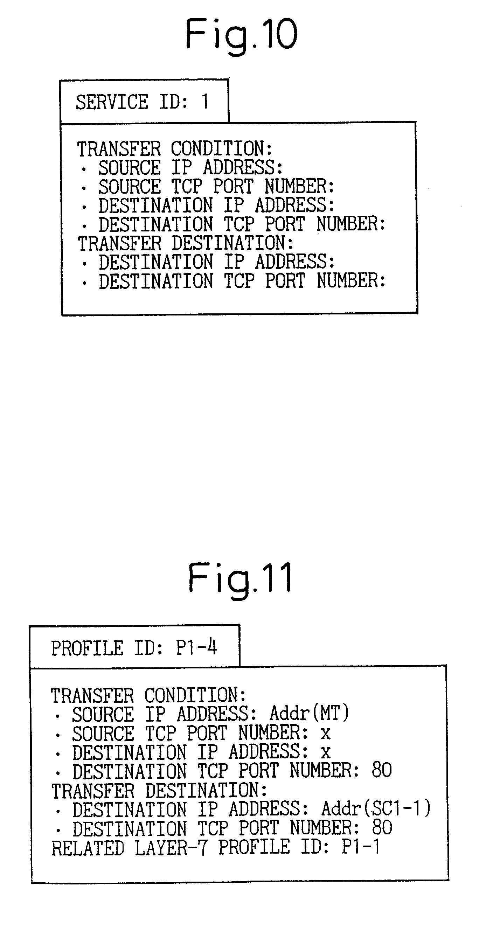

The profile with a profile ID of P1-1 shown in Fig.9 is a Layer-7 profile, and the dependent Layer-3 profile of it is configured as shown in Fig.10. Further, the profile with a profile ID of P1-2 is an independent Layer-3 profile. Likewise, the profile with a profile ID of P1-3 is an independent Layer-3 profile.

In this description, "dependent" means that a Layer-3 service is dependent on a Layer-7 service, and the dependent Layer-3 profile defines Layer-3 service provided under Layer-7 service. On the other hand, "independent" means that Layer-3 service is defined independently of Layer-7 service. The independent Layer-3 profile (ID = P1-2) is cached and used by the edge device 2 managing the mobile terminal 1, and the independent Layer-3 profile (ID = P1-3) is cached and used by the edge device 5 managing the Web server device 6 which is the communication partner of the mobile terminal 1. For this reason, different priorities can be applied to each of an upward signal and a downward signal of DiffServ.

Next, the authentication server device 4 retrieves the service management table shown in Fig.7, confirms that the service (service ID = 1) can be controlled by a service control device having a service control device identifier (SC-ID = SC1) included in the aforementioned request, and that the service control device is a tightly edge-coupled service control device, and recognizes, based on this confirmation, that it is necessary to provide Layer-7 profiles dynamically. The word "dynamically" means that the authentication server device 4 transfers and provides a Layer-7 profile, at terminal authentication, for the service control device which needs the Layer-7 profile.

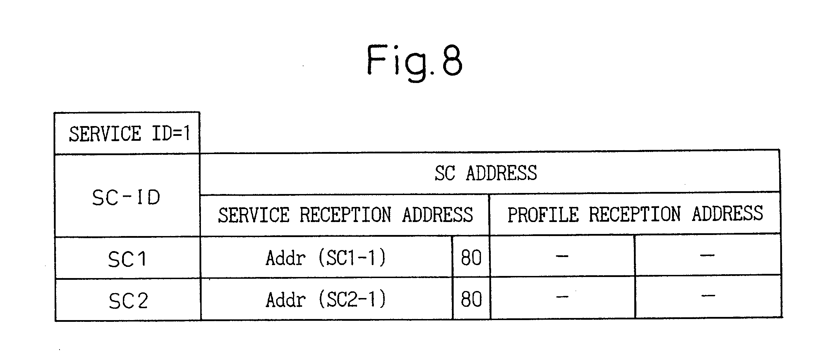

Next, the authentication server device 4 refers to the service control device address management table shown in Fig.8, and obtains a service reception address (Addr(SC1-1), port number 80) of the tightly edge-coupled service control device 3-10 using the previously obtained service ID (=1) and SC-ID (=SC1) as a retrieval key. The authentication server device 4 creates, based on this service reception address, a dependent Layer-3 profile (see Fig.11) which defines that a destination of packets, to which Layer-7 service (URL filtering service) is applied, of the packets transmitted from the mobile terminal 1, is the tightly edge-coupled service control device 3-10.

Further, the profile reception address shown in Fig.8 is a profile destination address used when the authentication server device 4 transmits a profile to a loosely edge-coupled service control device dynamically or statically. In this embodiment, both of SC1 (3-11) and SC2 (3-12) are tightly edge-coupled service control devices, no address ( - ) is set in the profile reception address columns for SC1 and SC2.

In case of the dependent Layer-3 profile (P1-4) shown in Fig.11, when a packet received from the mobile terminal 1 satisfies a "transfer condition", that is, when the address of the source of the received packet agrees with the IP address (Addr(MT)) of the mobile terminal 1 and the destination TCP port is "80" (HTTP service), the received packet is transferred to the service reception address (Addr(SC1-1), port number 80) of the tightly edge-coupled service control device 3-10.

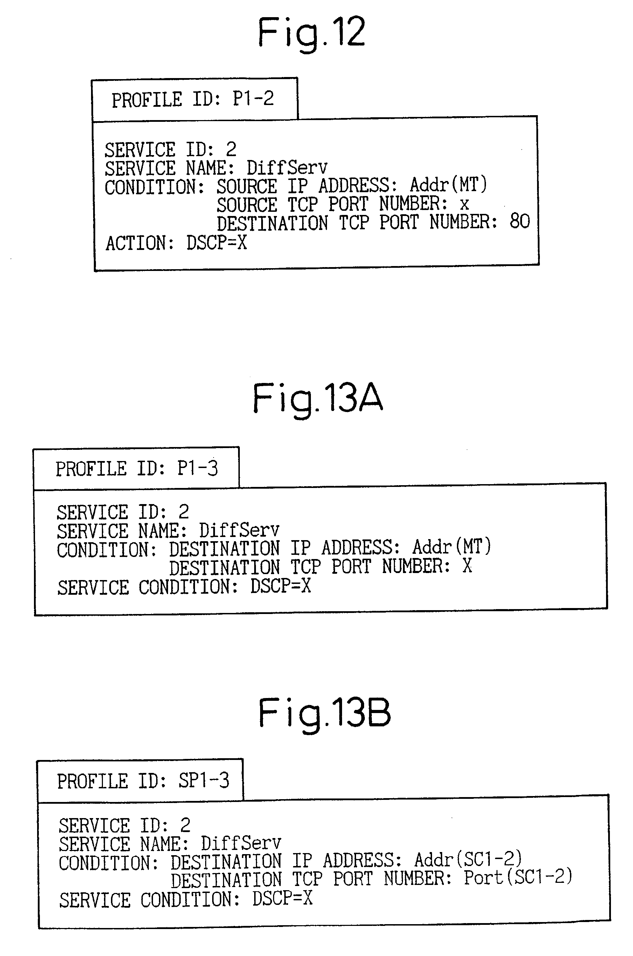

Furthermore, in case of the independent Layer-3 profile (P1-2) shown in Fig.12, the IP address (Addr(MT)) of the mobile terminal 1 is set as a source IP address which is a "condition", and the edge device 2 transmits packets received from the mobile terminal 1 to a destination according to the priority of DSCP (DiffServ Cord Point) value "X".

In case of the independent Layer-3 profile (P1-3) shown in Fig.13A, when a user does not obtain a Layer-7 service but obtains a Layer-3 service only, the IP address (Addr(MT)) of the mobile terminal 1 is set as a destination IP address which is a "condition". For this reason, a Layer-3 service is provided to packets directly transmitted, without through a service control device, to the mobile terminal 1 from the device communicating with it and, thereby, a Layer-3 service can be provided in both of the upward directions and downward direction of the mobile terminal. Further, in case of the independent Layer-3 profile (SP-13) shown in Fig.13B, when a user obtains a Layer-7 service and a Layer-3 service, an IP address (Addr(SC1-2)) of the tightly edge-coupled service control device 3-10 is set. For this reason, packets transmitted by the Web server which is a communication partner are relayed by the tightly edge-coupled service control device 3-10, and thereby Layer-3 service can be provided in both of the upward directions and downward direction of the mobile terminal.

Lastly, when transmitting an authentication response message to the tightly edge-coupled service control device 3-10, the authentication server device 4 includes the Layer-7 profile (P1-1) related to the aforementioned Layer-7 service and its dependent Layer-3 profile (P1-4), and the independent Layer-3 profiles (P1-1 and 1-3) in the response message and transmits them to the tightly edge-coupled service control device 3-10.
(7) The tightly edge-coupled service control device 3-10 receives the authentication response message, and then caches the Layer-7 profile (P1-1) necessary for providing its Layer-7 service, and the independent Layer-3 profiles (P1-3) to be transferred to the edge device 5 managing the device 6 which is the communication partner, and transmits an authentication response message, in which the independent Layer-3 profiles (P1-2 and P1-3) and the dependent Layer-3 profile (P1-4) are set, to the edge device 2.
(8) The edge device 2 receives the authentication response message, and then caches the independent Layer-3 profiles (P1-2 and P1-3) necessary for providing its Layer-3 service, and the dependent Layer-3 profile (P1-4) related to the providing of Layer-7 service, and transmit an authentication response message not including them to the mobile terminal 1.
(9) The mobile terminal 1 transmits a content requesting packet to the Web server device 6 which is the communication partner after confirming the authentication response, and the edge device 2 stores the content requesting packet for a certain period and determines whether the content requesting packet matches the condition defined in the Layer-3 profile (P1-2) or the dependent Layer-3 profile (P1-4). In this case, the source IP address and the destination TCP port of the received packet matches all of the conditions, which are defined as the "conditions" of the independent Layer-3 profile and the "transfer conditions" of the dependent Layer-3 profile.

For this reason, the received packet is encapsulated by a packet in which the DSCP value of the packet header is "X", and the destination IP address includes the IP address (Addr(SC1-1)) of the tightly edge-coupled service control device 3-10. At that time, a profile ID (= P1-1) related to the matched Layer-7 profile is set to the Ipv6 extended header. Thus, the packet in which the DSCP value is "X" is transferred from the edge device 2 to the tightly edge-coupled service control device 3-10.

When the packet is transferred from the edge device 2 to the tightly edge-coupled service control device 3-10, the destination IP address of the received packet may be rewritten to the IP address (Addr(SC1-1)) of the tightly edge-coupled service control device 3-10. In addition, when the edge device 2 and the tightly edge-coupled service control device 3-10 are connected directly without through a router or the like, as configured in this embodiment, all of the packets satisfying the conditions may be transferred directly to the tightly edge-coupled service control device 3-10, instead of rewriting the destination IP address.
(10) The tightly edge-coupled service control device 3-10 receives a packet from the edge device 2, and then builds up Layer-7 information and performs determination about a Layer-7 trigger based on the Layer-7 information. The Layer-7 service starting condition trigger is set, for example, in the service switching section 332 (Fig.3), and in case of the URL filtering service in this embodiment, the Layer-7 trigger is detected by the starting condition "a content request message has occurred".

In this case, as the tightly edge-coupled service control device 3-10 has already received the matched profile ID (= P1-1) from the edge device 2, it can recognize the corresponding Layer-7 profile (P1-1) easily. The tightly edge-coupled service control device 3-10 learns, from the Layer-7 profile, that the user of the mobile terminal 1 concerned has subscribed to an URL filtering service such as a service of blocking the access to a pay content, and then performs the URL filtering service for the received URL using the URL access list.

When the content request message passes the URL filter, the tightly edge-coupled service control device 3-10 recognizes, from the DSCP value "X" set in the header of the received packet, that Layer-3 service (DiffServ) is applied for the transfer of the packet. For this reason, the tightly edge-coupled service control device 3-10 reserves its IP address (Addr(SC1-2)) and port number (Port (SC1-2)), and sets this information in the independent Layer-3 profile (SP1-3), based on the independent Layer-3 profile (P1-3), to transmit the independent Layer-3 profile to the edge device 2 (Fig.13B).

The edge device 2 stores the received independent Layer-3 profile, for a certain period, in preparation for a Layer-3 profile request message from the edge device 5 managing the Web server device 6 with which the edge device 2 is communicating.
(11) The tightly edge-coupled service control device 3-10 transmits the content request message which has passed the URL filter to the Web server device 6 through the edge device 2. In the header of this transmission packet, the reserved source IP address (Addr(SC1-2) and TCP port number (Port (SC1-2)), and the same DSCP value "X" as the received packet are set. The edge device 5 with which the tightly edge-coupled service control device 3-10 is communicating receives the packet having DSCP value "X", and then usually clears the DSCP value when outputting the packet to the Web server device 6.
(12) The Web server device 6 transmits a content response to the tightly edge-coupled service control device 3-10. The destination IP address and destination port number of the packet to be transmitted are "Addr(SC1-2)" and "port(SC1-2)" respectively.
(13) The content response passes through the edge device 5 managing the Web server 6, and then the edge device 5 transmits a Layer-3 profile request message to the edge device 2 which is the transmitter of the Layer-3 profile.
(14) The edge device 2 receives the Layer-3 profile request message, and then sets the independent Layer-3 profile previously received from the tightly edge-coupled service control device 3-10 in a corresponding Layer-3 profile response message and transmits it to the edge device 5. The edge device 5 caches the received independent Layer-3 profile, and allows the independent Layer-3 profile to be applied to packets received from the web server 6.

After that, it is determined whether a packet transmitted by the Web server 6 matches the condition of the Layer-3 profile (SP1-3) when the packet passes through the edge device 5, and a Layer-3 service is applied to a packet matching the condition. In other words, "X" is set to the DSCP value of the header of the packet.
(15) The tightly edge-coupled service control device 3-10 receives the content response from the Web server 6 through the edge device 5, and then transmits the content response to the edge device 2. The edge device 2 clears the DSCP value "X" of the received packet and then transmits the packet to the mobile terminal 1. The mobile terminal 1 does not have to clear the DSCP value "X" because it does not make a determination regarding a DSCP value.

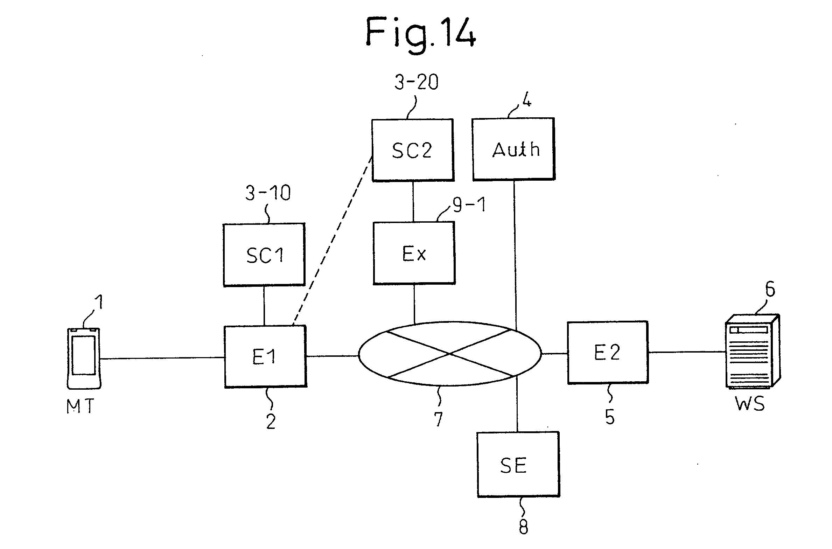

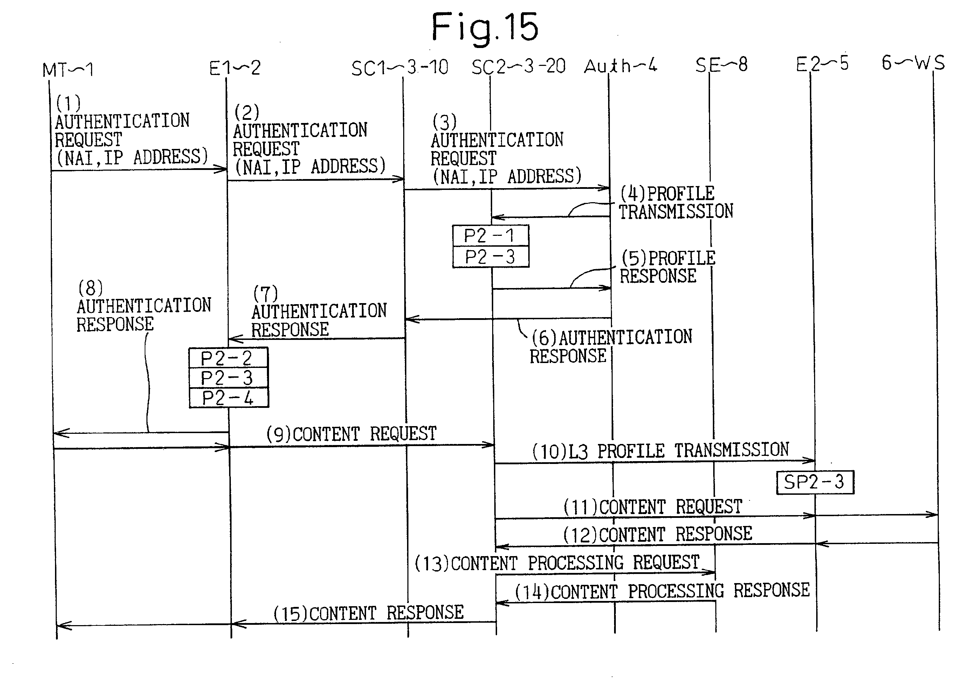

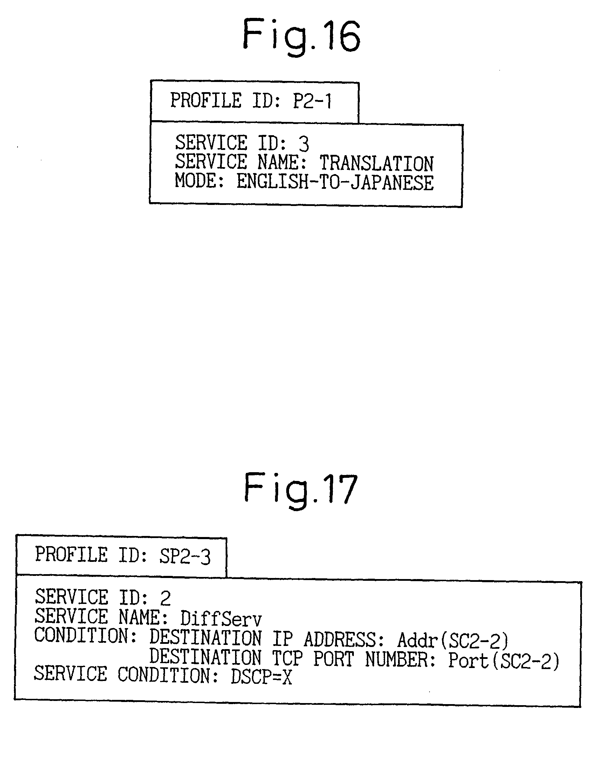

Figs.14 to 17 show a second embodiment of the present invention. Fig.14 shows a second example configuration of a service control network according to the present invention, Fig.15 shows an operation sequence of it, and Figs.16 and 17 show an example of a service profile, etc.

In Fig.14, an edge device (E1) 2 connects with a tightly edge-coupled service control device(SC1)3-10, and another edge device (Ex) 9-1 connects with a tightly edge-coupled service control device(SC2)3-20. Furthermore, a service implementing server device(SE)8 is added, which implements English-to-Japanese translation processing. The service control device(SC2)3-20 in this embodiment is a loosely edge-coupled service control device for the edge device (E1) 2 as shown with a dotted line in the figure.

Users in this embodiment have subscribed to a content English-to-Japanese translation service of a Layer-7 service and DiffServ of a Layer-3 service. Fig.16 shows an example of a Layer-7 profile (P2-1). The figure of its dependent Layer-3 profile (P2-4) is omitted because it is identical to the dependent Layer-3 profile (P1-4) in Fig.11.

Fig.17 shows an example of an independent Layer-3 profile (SP2-3) cached by the edge device 5 with which the edge device 2 communicates. The figures of independent Layer-3 profiles (P2-2 and P2-3) cached by the edge device 2 are omitted because they are identical with the independent Layer-3 profiles (P1-2 and P1-3) in Figs.12 and 13A.

The operation of the second embodiment is described below with reference to Fig.15.
(1) to (3) are identical with (3) to (5) of the first embodiment except that the edge device 2 transmits an authentication request message to the only one tightly edge-coupled service control device 3-10 with which the edge device 2 can connect.
(4) The authentication server device 4 receives aforementioned authentication request message, and then performs authentication processing for the mobile terminal 1. When the authentication server device 4 has succeeded in the authentication, it requests information on the service to which the mobile terminal 1 has subscribed in the same manner as the first embodiment. In other words, the authentication server device 4 retrieves the profile of the mobile terminal 1 concerned using the NAI (mt@domainX) of the mobile terminal as a keyword, and recognizes, based on the service ID obtained from the profile, that the mobile terminal 1 has subscribed to a content English-to-Japanese translation service which is a Layer-7 service, and DiffServ which is a Layer-3 service.

Next, the authentication server device 4 retrieves the service management table to confirm that English-to-Japanese translation corresponding to the obtained service ID can be controlled by the loosely edge-coupled service control device(SC2)3-20 and it is necessary to provide profiles dynamically. Furthermore, the authentication server device 4 retrieves the service control device address management table to obtain the service reception address of the loosely edge-coupled service control device(SC2)3-20, and the profile reception address in case of this embodiment, using the obtained service ID and SC-ID as a retrieval key.

The authentication server device 4 transmits a profile transmission message, which includes the created Layer-7 profile (P2-1) and the independent Layer-3 profile (P2-3), and in which the aforementioned profile reception address is set in the destination address, to the loosely edge-coupled service control device 3-20.
(5) The loosely edge-coupled service control device 3-20 caches the received Layer-7 profile (P2-1) and independent Layer-3 profile (P2-3), and then transmits a profile response message to the authentication server device 4.
(6) The authentication server 4 reads the profile response, and then transmits an authentication response message, in which a dependent Layer-3 profile (P2-4) and an independent Layer-3 profile (P2-2) related to the aforementioned Layer-7 profile are set, to the tightly edge-coupled service control device(SC1)3-10 which requested the authentication. In the IP address to which the dependent Layer-3 profile is transferred, the service reception address (Addr(SC2-1)) of the loosely edge-coupled service control device 3-20 is set.
(7) The tightly edge-coupled service control device 3-10 receives the authentication response message, and then recognizes that the Layer-7 profile (P2-1) is not set in the authentication response message, and transmits the received authentication response message to the edge device 2 as it is. The authentication response message has no profile to be cached by the tightly edge-coupled service control device 3-10.
(8) The edge device 2 receives the authentication response message, and then caches the independent Layer-3 profiles (P2-2 and P2-3) and the dependent Layer-3 profile (P2-4) to transmit an authentication response message, which does not include these profiles, to the mobile terminal 1.
(9) After that, the mobile terminal 1 transmits a content request packet to the Web server device 6, and then the edge device 2 stores it for a certain period, to transmit a packet by which the received packet is encapsulated and which has the destination IP address (Addr(SC2-1) and the DSCP value "X", by the same processing as (9) of the first embodiment, to the loosely edge-coupled service control device 3-20.
(10) The loosely edge-coupled service control device(SC2)3-20 receives a packet, and then builds up Layer-7 information and performs determination about a Layer-7 trigger. As the content request does not contain any content for translation, the Layer-7 trigger is not detected. Next, the loosely edge-coupled service control device(SC2)3-20 recognizes that Layer-3 service (DiffServ) is applied to the received packet, and reserves its IP address (Addr(SC2-2)) and port number (Port(SC2-2)), and sets them in the independent Layer-3 profile (SP2-3) 3-20 (Fig.17).

The loosely edge-coupled service control device 3-20 specifies the edge device 5, to which the independent Layer-3 profile will be transmitted, based on the destination address of the Web server device 6, and then transmits the independent Layer-3 profile concerned to the edge device 5. The edge device 5 caches the received independent Layer-3 profile (SP2-3).
(11) After that, the loosely edge-coupled service control device 3-20 transmits the content request, in which a Layer-7 trigger has not been detected, to the Web server device 6 directly. At that time, "Addr(SC2-2)" is set to the IP address of a packet transmitter, "Port(SC2-2)" is set to the TCP port number of the packet transmitter, and the DSCP value "X" identical with that of the received packet is set to the DSCP value of the header. The edge device 5 clears the DSCP value "X" of the received packet, and then transmits the packet to the Web server device 6.
(12) The Web server device 6 transmits a content response corresponding to the received content request to the edge device 5. The destination of the packet is the loosely edge-coupled service control device 3-20, the destination IP address of the packet is set to "Addr(SC2-2)", and the destination TCP port number of the packet is set to "Port(SC2-2)". When the packet passes through the edge device 5, Layer-3 service corresponding to the previously cached. independent Layer-3 profile (SP2-3) is applied to the packet because the packet matches the independent Layer-3 profile, and the DSCP value of the packet is set to "X".
(13) The loosely edge-coupled service control device 3-20 builds up Layer-7 information about the received packet, and performs determination of the Layer-7 trigger. In this embodiment, the content transmitted by the Web server 6 is an English content, and thereby the Layer-7 trigger is detected. As a result, the loosely edge-coupled service control device 3-20 transmits a content processing request to the service implementing server device(SE)8 which implements an English-to-Japanese translation service.
(14) The service implementing server device 8 performs English-to-Japanese translation processing of the received English content, and transmits the obtained Japanese content to the loosely edge-coupled service control device 3-20.
(15) The loosely edge-coupled service control device 3-20 transmits a content response including the Japanese content to the mobile terminal 1. At that time, the edge device 2 clears the DSCP value "X" of the packet when relaying it.

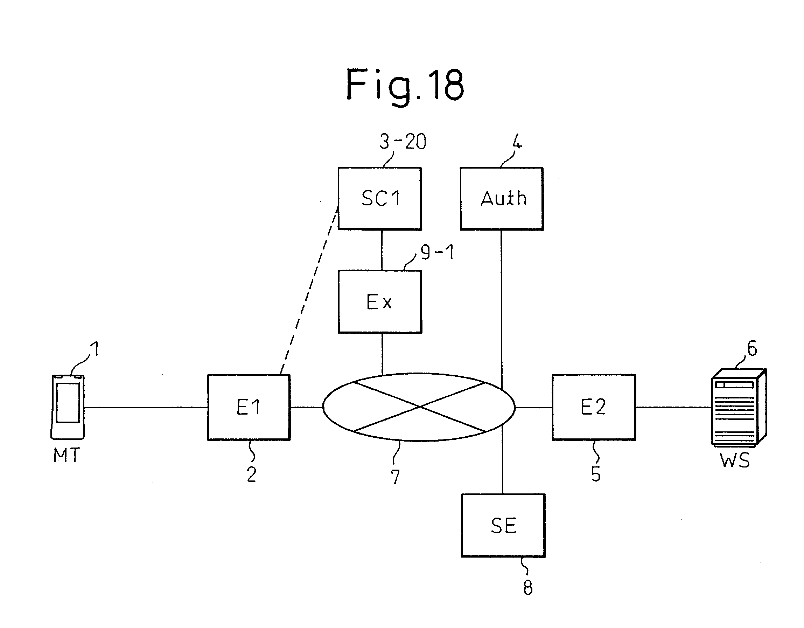

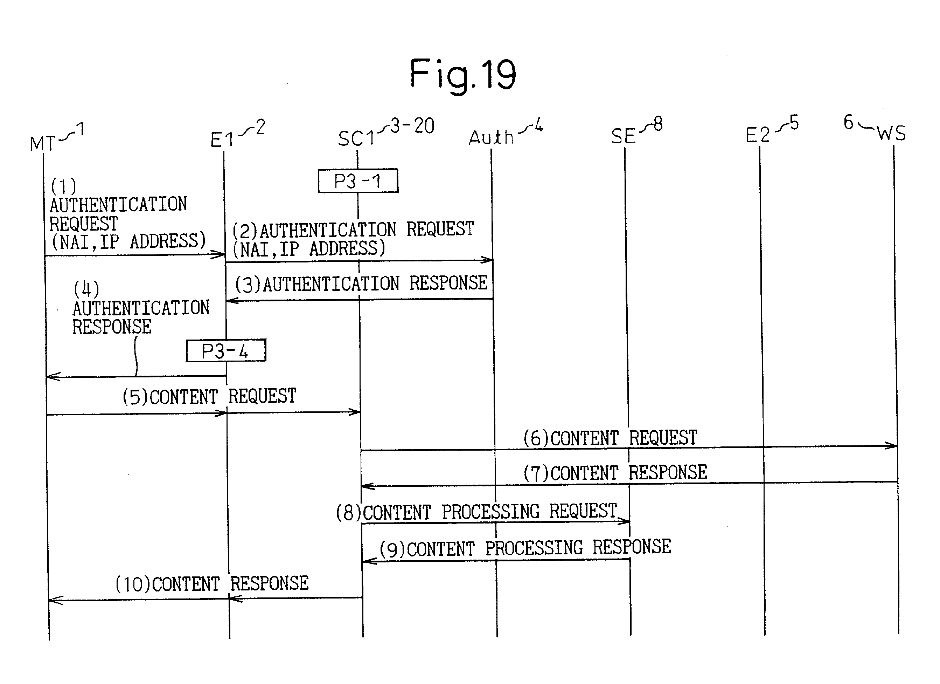

Figs.18 and 19 show a third embodiment of the present invention. Fig.18 shows a third example configuration of a service control network according to the present invention, and Fig.19 shows an example of its operation sequence. In Fig.18, the edge device 2 does not connect with a tightly edge-coupled service control device. Another edge device (EX) 9-1 connects with a tightly edge-coupled service control device(SC1)3-20. Also in this embodiment, the service control device(SC1)3-20 is a loosely edge-coupled service control device for the edge device (E1) 2 as shown by a dotted line in the figure. The mobile terminal 1 in this embodiment has subscribed to an English-to-Japanese translation service which is a Layer-7 service, but not to a Layer-3 service.

The operation of the third embodiment is described below with reference to Fig.19.
(1) and (2) are identical to the second embodiment except that the edge device 2 transmits an authentication request message to the authentication server device 4 directly because there is no tightly edge-coupled service control device with which the edge device 2 can connect.
(3) The authentication server device 4 receives the authentication request message, and then performs authentication processing for the mobile terminal 1. When the authentication server device 4 has succeeded in the authentication, it specifies the service, to which the mobile terminal 1 has subscribed, in the same manner as in the second embodiment. As a result of this, the English-to-Japanese translation can be controlled by the loosely edge-coupled service control device(SC1)3-20, and it is also recognized, in case of this embodiment, that Layer-7 profiles are provided statically.

The word "statically" means that a Layer-7 profile has been provided for a predetermined service control device in such manner that it is kept in the predetermined service control device and, in this embodiment, the loosely edge-coupled service control device 3-20 holds the Layer-7 profile. The authentication server device 4 further recognizes that the mobile terminal 1 has not subscribed to a Layer-3 service. As a result, the authentication server device 4 creates only a dependent Layer-3 profile (P3-4) related to English-to-Japanese translation service, sets it to the authentication response message, and then transmits the response message to the edge device 2. The configuration of the aforementioned dependent Layer-3 profile (P3-4) is identical to that shown in Fig.11.
(4) The edge device (E1) 2 receives the authentication response message, and then caches the dependent Layer-3 profile (P3-4), to transmit the authentication response message, in which the profile is not included, to the mobile terminal 1.
(5) The operation after that is identical with (9) to (15) of the second embodiment. However, as a Layer-3 service is not applied in this embodiment, it is excepted that a profile corresponding to the independent Layer-3 profile (SP3-3) is transmitted from the loosely edge-coupled service control device 3-20 to the edge device 5 ((10) in the second embodiment).

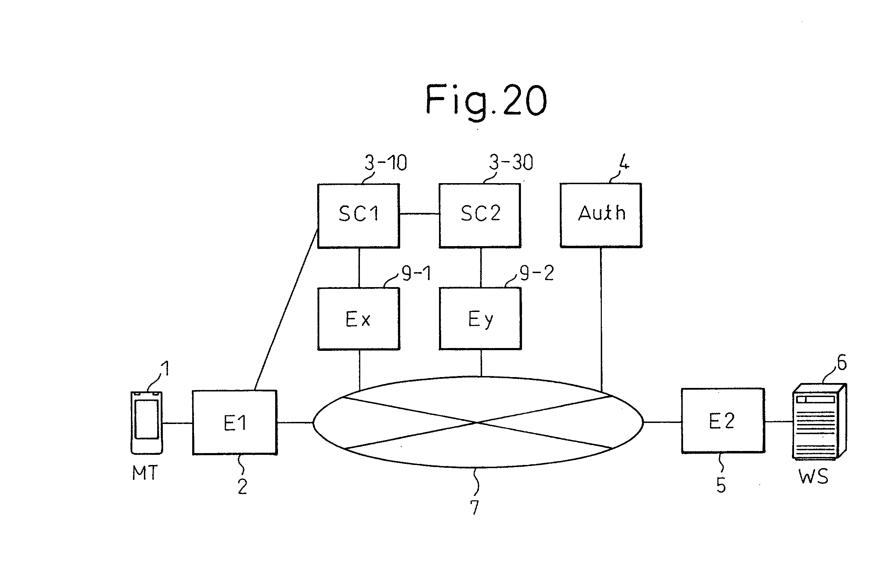

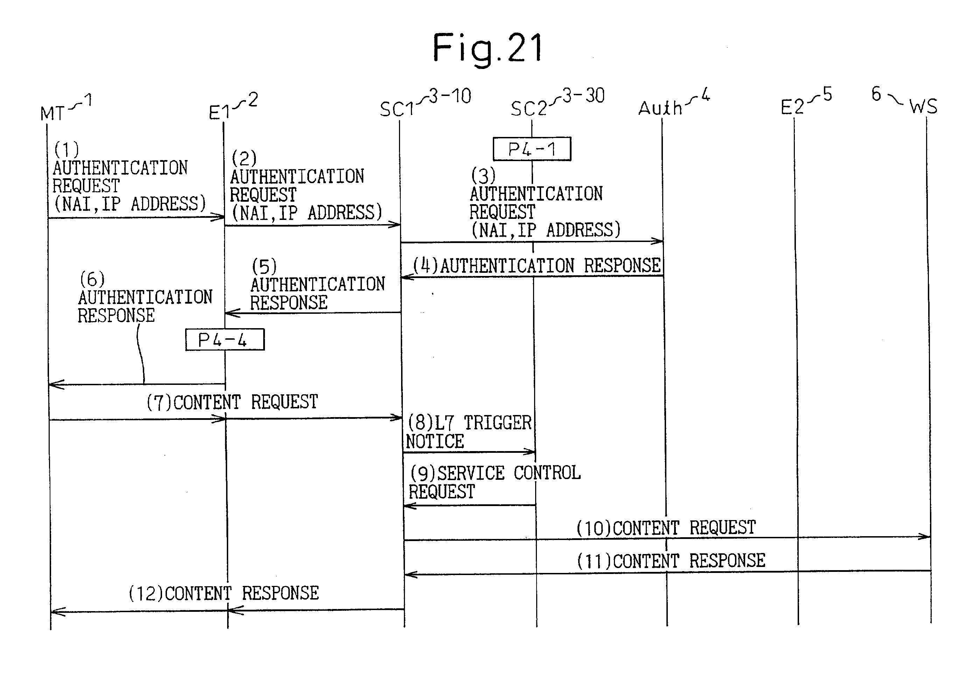

Figs.20 and 21 show a fourth embodiment of the present invention. Fig.20 shows a fourth example configuration of a service control network according to the present invention, and Fig.21 shows an example of its operation sequence.

In Fig.20, the edge device (E1) 2 does not directly connect with a service control device, but another edge device (Ex) 9-1 connects with a tightly edge-coupled service control device(SC1)3-10. Another edge device (Ey) 9-2 connects with a function-dependent service control device(SC2)3-30. The function-dependent service control device(SC2)3-30 performs service control utilizing the function of another service control device 3-10.

The service control device 3-10 is not directly connected to the edge device 2, but is a tightly edge-coupled service control device for the edge device 2 as shown with a solid line in the figure. The mobile terminal 1 in this embodiment has subscribed to a URL filtering service which is a Layer-7 service, but not to a Layer-3 service.

The operation of the fourth embodiment is described below with reference to Fig.21.
(1) to (3) are identical to (3) to (5) of the first embodiment except that the edge device 2 transmits an authentication request message through the network 7 to only one tightly edge-coupled service control device 3-10 with which the edge device 2 can connect.
(4) The authentication server device 4 receives the aforementioned authentication request message, and then performs authentication processing for the mobile terminal 1 concerned. When the authentication server device 4 has succeeded in the authentication, it specifies the service, to which the mobile terminal 1 has subscribed, in the same manner as the first embodiment. In this embodiment, the authentication server device 4 recognizes that URL filtering service can be controlled by the function-dependent service control device 3-30, which can be connected to the tightly edge-coupled service control device 3-10.

The authentication server device 4 further recognizes that the mobile terminal 1 has not subscribed to Layer-3 service. As a result, the authentication server device 4 creates only the dependent Layer-3 profile (P4-4) related to URL filtering service, sets it to the authentication response message, and transmits the response message to the tightly edge-coupled service control device 3-10.

The configuration of the aforementioned dependent Layer-3 profile (P4-4) is identical with that shown in Fig.11.
(5) The tightly edge-coupled service control device 3-10 receives the authentication response message, and then recognizes that the Layer-7 profile (P4-1) is not set in the authentication response message, to transmit the received authentication response message to the edge device 2 as it is.
(6) The edge device 2 receives the authentication response message, and then caches the dependent Layer-3 profile (P4-4) to transmit the authentication response message, in which the profile is not included, to the mobile terminal 1.
(7) The mobile terminal 1 transmits a content request packet to the Web server device 6, and then the edge device 2 stores it for a while. In this embodiment, the packet is transmitted to the tightly edge-coupled service control device 3-10 because it matches the dependent Layer-3 profile (P4-4).
(8) The tightly edge-coupled service control device 3-10 receives the packet, and then builds up Layer-7 information to perform determination about a Layer-7 trigger. The tightly edge-coupled service control device 3-10 detects a Layer-7 trigger, and then notifies the function-dependent service control device 3-30.
(9) The function-dependent service control device 3-30 manages and implements the URL filtering service. When the content request packet has passed the URL filter, the function-dependent service control device 3-30 transmits a service control request to the tightly edge-coupled service control device 3-10 to request the connection to the Web server device 6.
(10) The tightly edge-coupled service control device 3-10 receives the aforementioned service control request and then restarts the processing to transmit a content request to the Web server device 6.
(11) The Web server device 6 transmits a content response to the tightly edge-coupled service control device 3-10.
(12) The tightly edge-coupled service control device 3-10 receives the packet showing the content response, and then builds up Layer-7 information to perform determination about a Layer-7 trigger and a Layer-7 event. In this embodiment, the tightly edge-coupled service control device 3-10 does not detect any one of the Layer-7 trigger and the Layer-7 events, and transmits the content response to the mobile terminal 1.

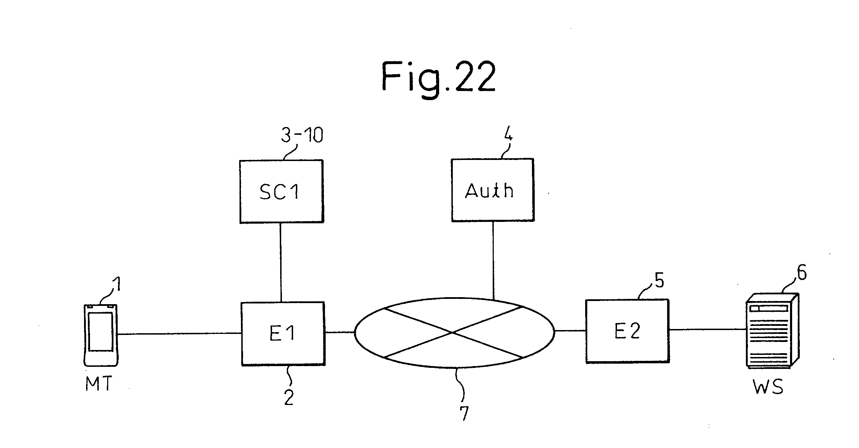

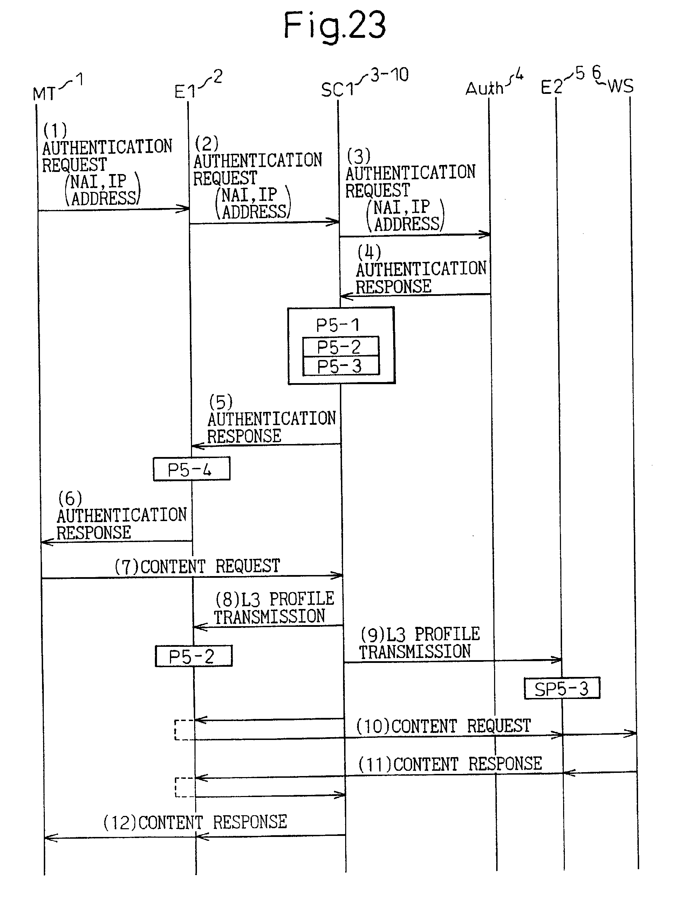

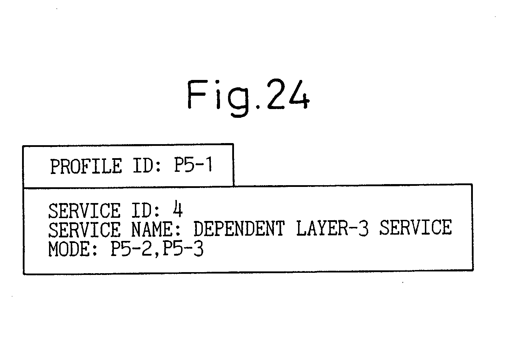

Figs.22 to 24 show a fifth embodiment of the present invention. Fig.22 shows a fifth example configuration of a service control network according to the present invention, Fig.23 shows an example of its operation sequence, and Fig.24 shows an example of a service profile, etc.

In Fig.22, the edge device (E1) 2 connects with only one tightly edge-coupled service control device (SC1) 3-10. The mobile terminal (MT) 1 has subscribed to a Layer-3 service (called "dependent L3 service" hereinafter) and it is determined whether a Layer-3 service (DiffServ) is applied or not according to the content of the Layer-7 information.

The operation of the fifth embodiment is described below with reference to Fig.23.
(1) to (3) are identical to (3) to (5) of the first embodiment except that the edge device 2 transmits an authentication request message to only one tightly edge-coupled service control device 3-10 with which the edge device 2 can connect through the network 7.
(4) The authentication server device 4 receives the aforementioned authentication request message, and then performs authentication processing for the mobile terminal 1. When the authentication server device 4 has succeeded in the authentication, it specifies the service, to which the mobile terminal 1 has subscribed, in the same manner as in the first embodiment. In this embodiment, the authentication server device 4 recognizes that dependent Layer-3 service can be controlled by the tightly edge-coupled service control device 3-10, and it is necessary provide its Layer-7 profile (P5-1) dynamically.

As shown in Fig.24, the Layer-7 profile of the dependent Layer-3 service includes the independent Layer-3 profiles (P5-2 and P5-3) to control DiffServ, in this embodiment, as part of it. The authentication server device 4 creates a dependent Layer-3 profile (P5-4) related to the Layer-7 profile, and sets the Layer-7 profile (P5-1) in the authentication response message to transmit the response message to the tightly edge-coupled service control device 3-10. The configuration of the aforementioned dependent Layer-3 profile (P5-4) is identical to that in Fig.11.
(5) The tightly edge-coupled service control device 3-10 receives the authentication response message, and then recognizes that the Layer-7 profile (P5-1) is set in the authentication response message, and caches it. The tightly edge-coupled service control device 3-10 transmits the authentication response message including only the remained dependent Layer-3 profile (P5-4) to the edge device 2.
(6) The edge device 2 receives the authentication response message, and then caches the dependent Layer-3 profile (P5-4) to transmit the authentication response message, in which the profile is not included, to the mobile terminal 1.
(7) The mobile terminal 1 transmits a content request packet to the Web server device 6, and the edge device 2 stores it for a while. In this embodiment, the packet is transmitted to the tightly edge-coupled service control device 3-10 because it matches the dependent Layer-3 profile (P5-4).
(8) The tightly edge-coupled service control device 3-10 receives the packet, and then builds up Layer-7 information to perform determination about a Layer-7 trigger. In this embodiment, the tightly edge-coupled service control device 3-10 detects the Layer-7 trigger, and transmits the independent Layer-3 profile (P5-2) of the independent Layer-3 profiles (P5-2 and P5-3) included in the previously obtained Layer-7 profile to the edge device (E1) 2 managing the mobile terminal 1.
(9) Likewise, the tightly edge-coupled service control device 3-10 also transmits an independent Layer-3 profile (SP5-3) created with reference to the independent Layer-3 profile (P5-3) to the edge device (E2) 5 managing the Web server 6 with which the mobile terminal 1 communicates. At that time, the destination IP address is set to "Addr(SC1-1)", and the destination TCP port number is set to "Port(SC1-1)", as the "conditions" of the independent Layer-3 profile (SP5-3).
(10) After that, the tightly edge-coupled service control device 3-10 transmits a content request packet to the Web server. When the packet is relayed by the edge device 2, it matches the Layer-3 profile (P5-2) previously obtained by the edge device 2, and its DSCP value is set to "X".
(11) The Web server device 6 transmits a content response corresponding to the received contents packet to the tightly edge-coupled service control device 3-10.
(12) When the packet transmitted from the Web server device 6 to the tightly edge-coupled service control device 3-10 is relayed by the edge device 5, it matches the Layer-3 profile (SP5-3) previously obtained by the edge device 5, and its DSCP value is set to "X". As the DSCP value "X" matches the DSCP value "X" set to the independent Layer-3 profile (SP5-3) by the edge device (E2) 5 in the procedure (10), it is inherited by the packet transferred from the tightly edge-coupled service control device 3-10 to the edge device 2.

In each of the aforementioned embodiments, an edge device and a service control device are described as a physical device different from each other. But they may be provided in a physical device which realizes the functions of both of them.

Below are described, assuming that the aforementioned embodiments of the present invention are understood, detail control flows of functional sections of edge devices 2, service control devices 3, and authentication server devices 4 which totally realize the embodiments of the present invention.

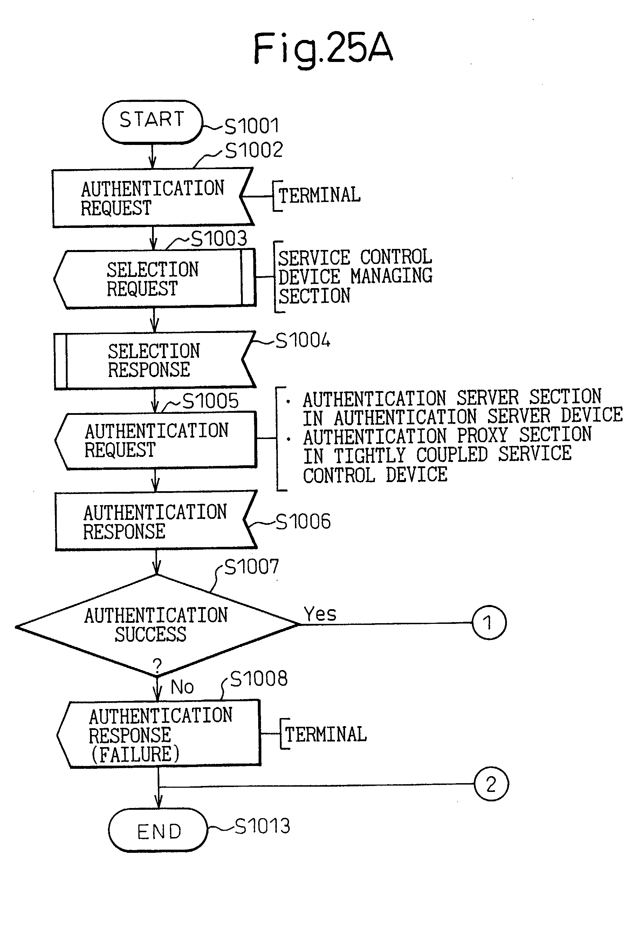

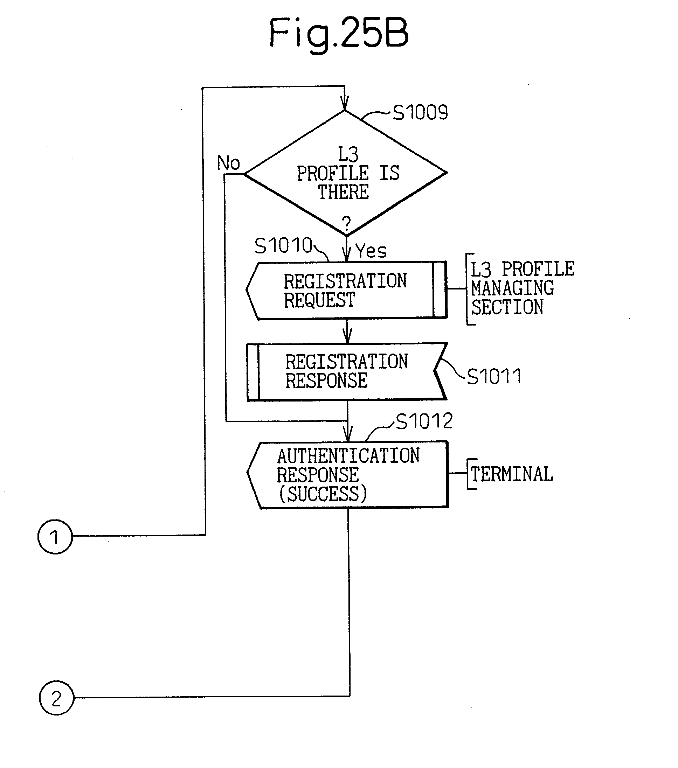

Figs.25 to 31 show control flows of functional sections of an edge device 2 according to the present invention. Regarding the aforementioned functional sections, refer to Fig.2.

Fig.25 shows an example of the control flow of the authentication client section 25.

The authentication client section 25 receives an authentication request message from the mobile terminal 1, and then transmits a service control device selection request to the service control device managing section 24 (S1002 and S1003).

As a result, the authentication client section 25 receives an address necessary for communicating with the authentication server section 421 (Fig.3) of the authentication server device 6 or the authentication proxy section 32 (Fig.3) of the tightly edge-coupled service control device, as a service control device selection response message from the service control device managing section 24 (S1004). After that, the authentication client section 25 transmits an authentication request message to the received address, and receives an authentication response message responding to the request message (S1005 and S1006).

Next, the authentication client section 25 determines whether it has succeeded in the authentication, and when it has succeeded in the authentication, it determines whether the authentication response message includes a Layer-3 profile (S1007 and S1009). When the authentication response message includes a Layer-3 profile, the authentication client section 25 transmits a Layer-3 profile registration request to the Layer-3 profile managing section 21, and then transmits a response message indicating the success of the authentication to the mobile terminal 1 after receiving a registration response (S1010 to 1012).

On the contrary, when the authentication response message does not include a Layer-3 profile, the authentication client section 25 only transmits a response message indicating the success of the authentication to the mobile terminal 1 (S1012). On the other hand, when the authentication client section 25 has not succeeded in the authentication, it transmits a response message indicating the failure of the authentication to the mobile terminal 1 (S1007 and S1008).

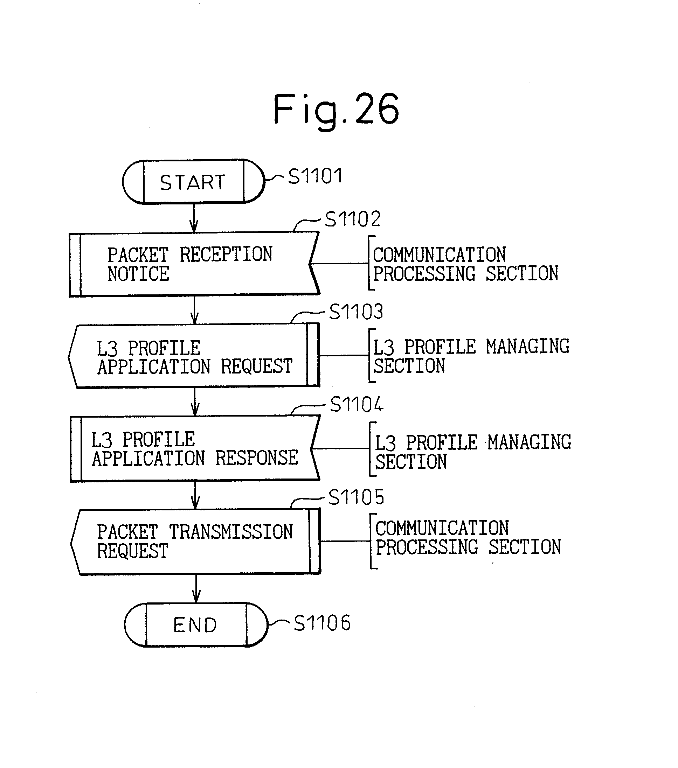

Figs.26 to 29 show an example of the control flow of the service basic processing section 23. Fig.26 shows an example of the control flow in case of having received a packet. The service basic processing section 23 receives a packet from the communication processing section 26, and then transmits a request to apply the Layer-3 service of the received packet to the L3 profile managing section 21 (S1102 and S1103). The service basic processing section 23 receives a response for applying the Layer-3 service from the L3 profile managing section 21, and then transmits a packet to the communication processing section 26 (S1104 and S1105).

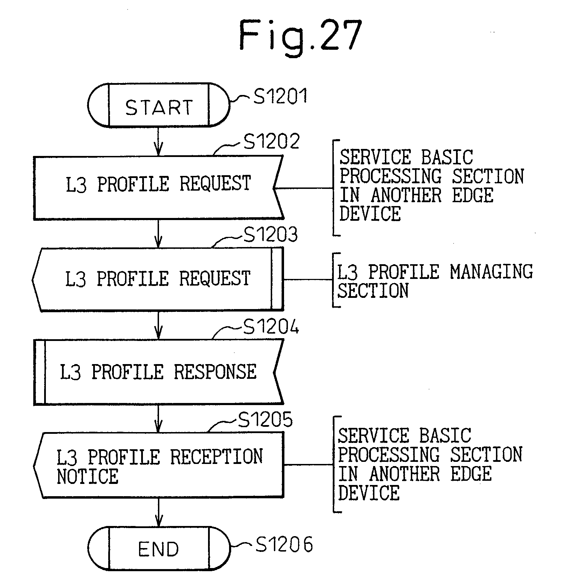

Fig.27 shows an example of the control flow in case of having received a Layer-3 profile request. The service basic processing section 23 receives a Layer-3 profile request message from another edge device 5, and then transmits a Layer-3 profile request to the L3 profile managing section 21 (S1202 and S1203). The service basic processing section 23 receives a Layer-3 profile response responding to the Layer-3 profile request from the L3 profile managing section 21, and then transmits a Layer-3 profile response message to the service basic processing section 52 of the edge device 5 (S1204 and S1205).

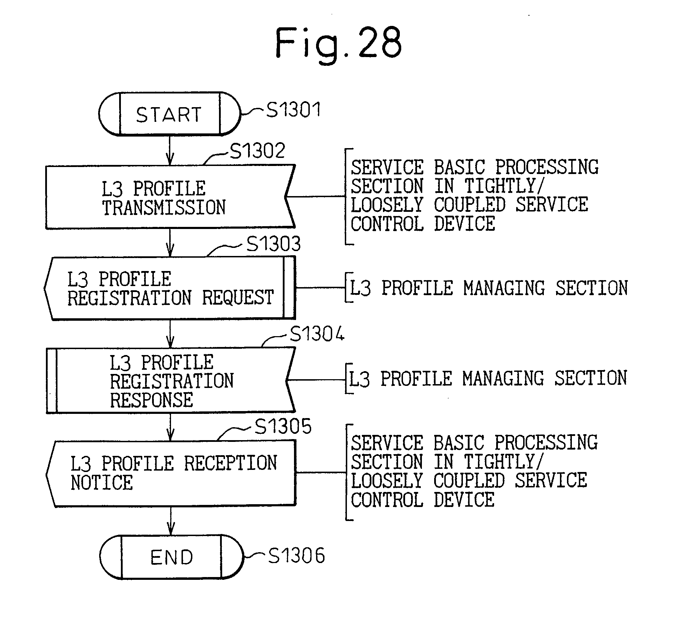

Fig.28 shows a control flow in case of having received a Layer-3 profile. The service basic processing section 23 receives a Layer-3 profile transmitted by the service basic processing section 52 of the edge device 5, or the service basic processing section 333 (Fig.3) of the tightly edge-coupled service control device or the loosely edge-coupled service control device 3, and then transmits a Layer-3 profile registration request to the L3 profile managing section 21 (S1302 and S1303). The service basic processing section 23 receives a Layer-3 profile registration response responding to the Layer-3 profile registration request from the L3 profile managing section 21, and then transmits a Layer-3 profile reception message to the transmitter of the Layer-3 profile (S1304 and S1305).

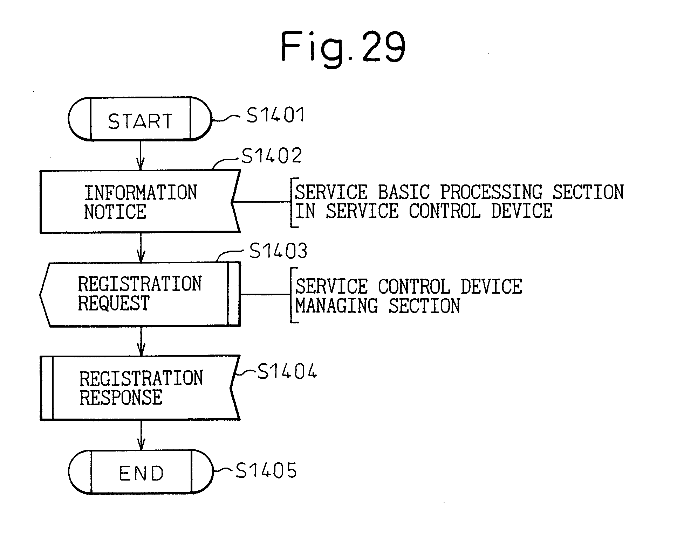

Fig.29 shows an example of the control flow in the case of having received a service control device information notice. The service basic processing section 23 receives a service control device information notice from the service basic processing section 333 (Fig.3) of the service control device 3, and then transmits a request for registering the received service control device information to the service control device managing section 24 to receive a response indicating the completion of the registration from the service control device managing section 24 (S1402 to S1404). After that, the service basic processing section 23 may transmit a service control information notice reception message to a service control device 3 to notify it of the service control device information.

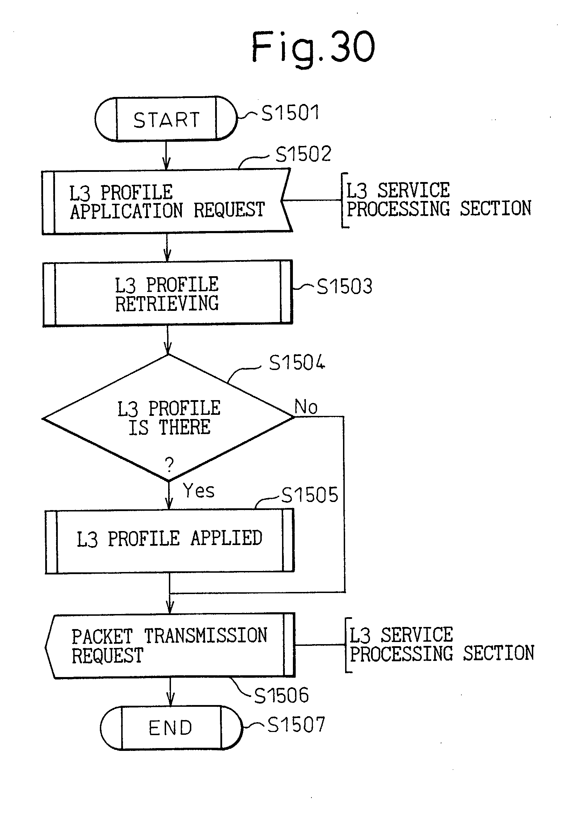

Fig.30 shows an example of the control flow of the L3 profile managing section 21. The L3 profile managing section 21 receives a Layer-3 profile application request from the Layer-3 service processing section 22, and then retrieves a Layer-3 profile matching the conditions of destination/source IP addresses and destination/source port numbers set in the packet to which Layer-3 service is applied (S1502 and S1503).

When there is a Layer-3 profile matching the aforementioned conditions, the L3 profile managing section 21 applies the content of the retrieved Layer-3 profile to the packet (S1504 to S1506). On the contrary, when there is no Layer-3 profile matching the aforementioned conditions, the L3 profile managing section 21 does nothing. In any of the above cases, the L3 profile managing section 21 transmits a Layer-3 profile application response to the Layer-3 service processing section 22.

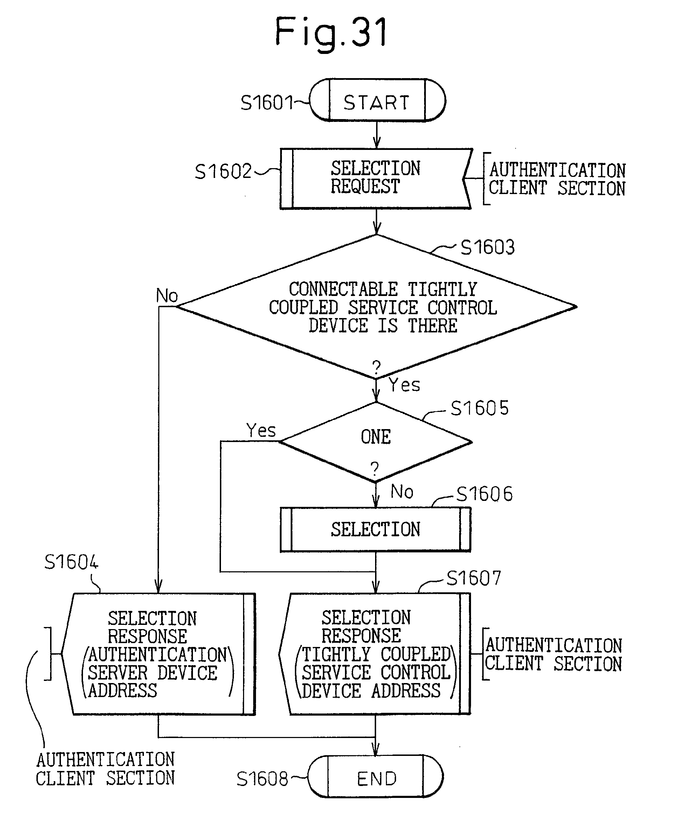

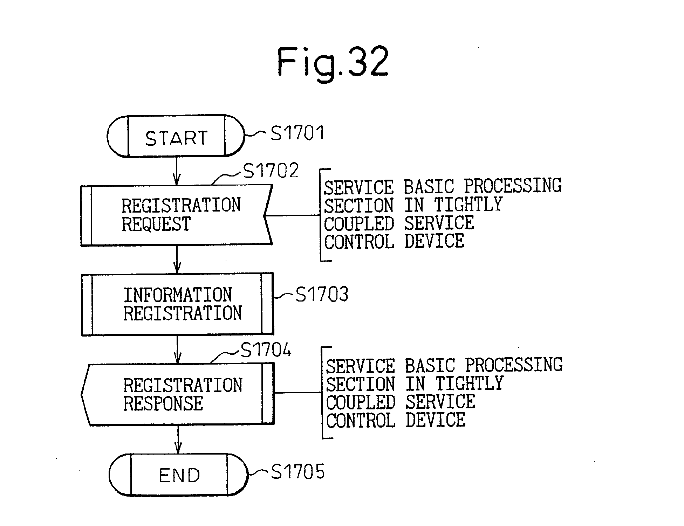

Figs.31 and 32 show a control flow of the service control device managing section 24.

Fig.31 shows a control flow in case of having received a service control device selection request. The service control device managing section 24 receives a service control device selection request from the authentication client section 25, and then determines whether there is a tightly edge-coupled service control device 3 with which it can connect (S1602 and S1603). When there is no tightly edge-coupled service control device 3 with which it can connect, it transmits, an address for it to communicate with the authentication server section 421 (Fig.3) of the authentication server device 4, to the authentication client section 25, as a service control device selection response (S1604).

On the contrary, when there is a tightly edge-coupled service control device 3 with which it can connect, it determines whether there is only one tightly edge-coupled service control device 3 (S1605). In the case that there are a plurality of tightly edge-coupled service control devices 3, one of them is selected. In case that there is only one tightly edge-coupled service control device 3, it is selected. After that, service control device managing section 24 transmits an address, for it to communicate with the authentication proxy section 32 (Fig.3) of the tightly edge-coupled service control device 3, to the authentication client section 25 (S1606 and S1607).

Fig.32 shows a control flow in case of having received a service control device information registration request. The service control device managing section 24 receives a service control device information registration request from the service basic processing section 333 (Fig.4) of the tightly edge-coupled service control device 3, and then registers the service control device information to transmit a response message indicating the completion of the registration of the service control device information to the service basic processing section 333 (S1702 to S1704).

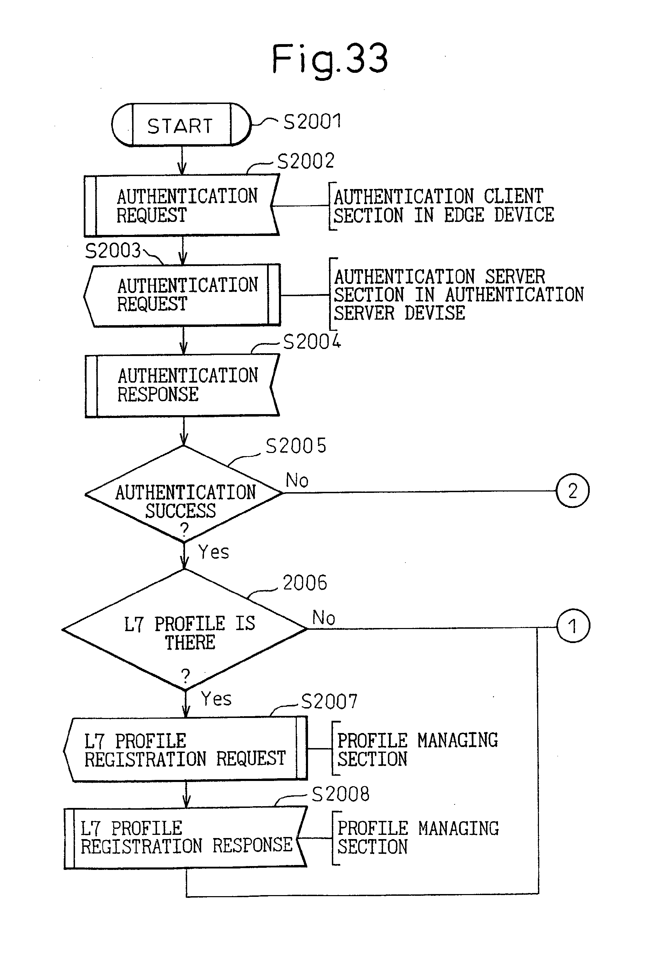

Figs.33 to 43 show control flows of functional sections of a service control device 3 according to the present invention. Regarding the aforementioned functional sections, refer to Fig.3.

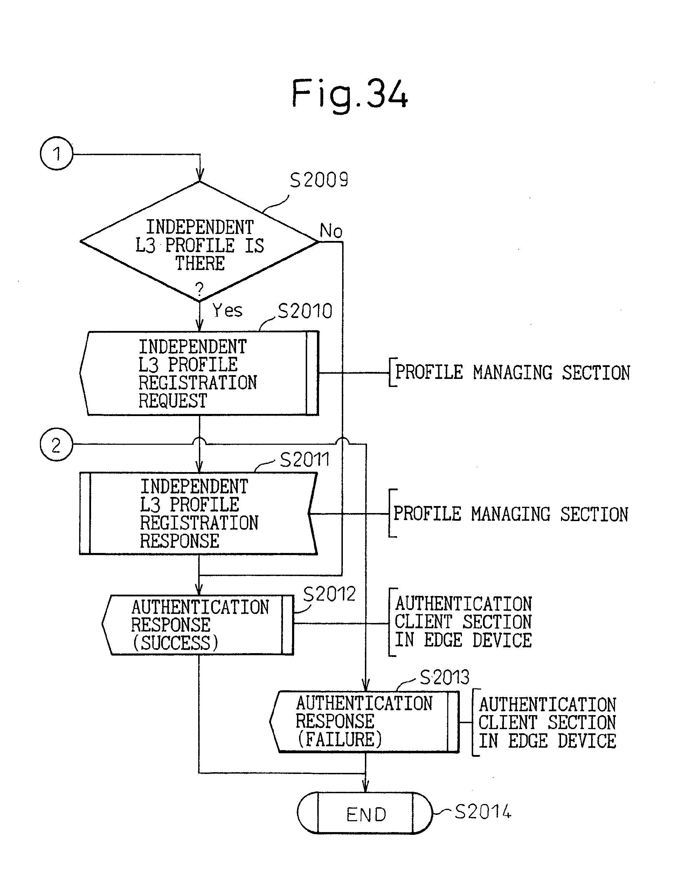

Figs.33 and 34 show a control flow of the authentication proxy section 32. The authentication proxy section 32 receives an authentication request message from the authentication client section 25 (Fig.2) of the edge device 2, and then transmits it to the authentication server section 421 of the authentication server device 4 to receive an authentication response message, responding to it, from the authentication server section 421 (S2002 to S2004).

Next, the authentication proxy section 32 determines whether it has succeeded the authentication. In case of failure, it transmits a response message indicating the failure of the authentication to the authentication client section 25 of the edge device 2 (S2005 and S2013). On the other hand, in the case of success, it determines whether the authentication response message includes a Layer-7 profile and an associated dependent Layer-3 profile (S2005 and S2006). When a Layer-7 profile is set in the message, it transmits, for the purpose of caching the Layer-7 profile, a Layer-7 profile registration request to the profile managing section 31 to receive a registration response responding to the request (s2007 and S2008).

The authentication proxy section 32 also determines whether an independent Layer-3 profile is registered. In the case that an independent Layer-3 profile is not registered, it transmits a response message indicating the success of the authentication as it is to the authentication client section 25 of the edge device 2 (S2009 and S2012). On the contrary, when an independent Layer-3 profile is registered, it transmits an independent Layer-3 profile registration request to the profile managing section 31 to receive a registration response responding to the request from the profile managing section 31, and then transmits a response message indicating the success of the authentication to the authentication client section 25 of the edge device 2 (S2009 and S2012).

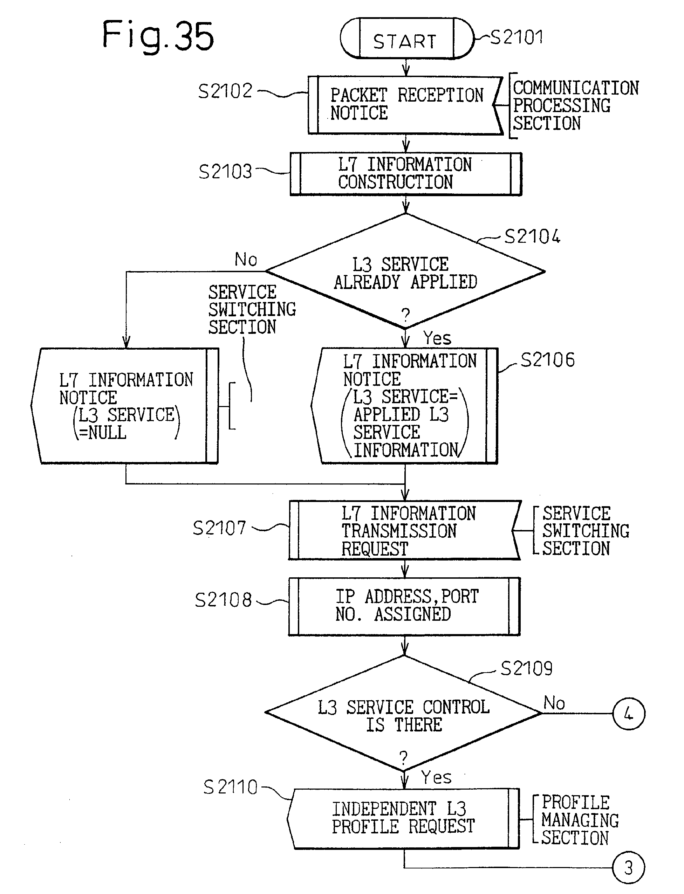

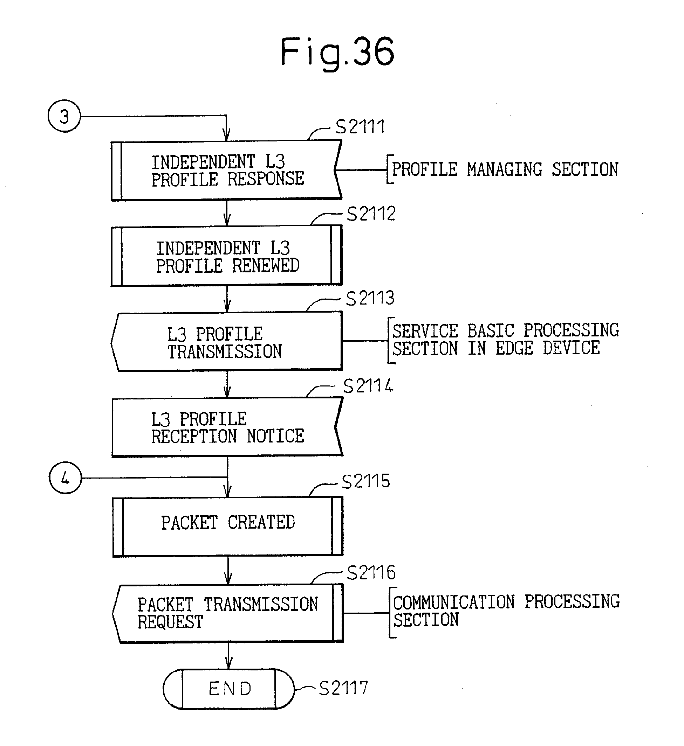

Figs.35 to 38 show a control flow of the service basic processing section 333. Figs.35 and 36 show a control flow of the service basic processing section 333 in case of having received a packet. This control flow is common to a tightly edge-coupled service control device and a loosely edge-coupled service control device.

The service basic processing section 333 receives a packet from the communication processing section 34, and then builds up Layer-7 information from the received packet (S2102 and S2103). Furthermore, when the destination address of the packet is that of the service control device 3, the service basic processing section 333 obtains information about a communication partner device (Web server device 6 in case of this embodiment) to which the mobile terminal 1 wants to communicate, from the built up Layer-7 information, and obtains the address of the communication partner device by using the obtained information and a function of DNS (Domain Name System), or the like, not shown in the figures.

Next, the service basic processing section 333 determines whether Layer-3 service is applied to the received packet (S2104). In case that Layer-3 service is applied, it notifies the service information obtained after the determination to the service switching section 332 with the Layer-7 information (S2106 and S2107). On the contrary, when Layer-3 service is not applied, it passes the Layer-7 information, in which Layer-3 service is set to "NULL (no applied service)", to the switching section 332 (S2105 and S2106).

The service basic processing section 333 receives a Layer-7 information transmission request and, then at first, assigns an IP address and port number, which are used for the transmission of the Layer-7 information and have not been assigned in the service control device 3, for the information transmission, and determines whether it is necessary to apply a Layer-3 service (S2107 and S2109). When Layer-3 service is not applied (in case of NULL), the service basic processing section 333 creates a packet to which Layer-3 service is not applied and transmits a packet transmission request to the communication processing section 34 (S2115 and S2116). On the other hand, when Layer-3 service is applied, the service basic processing section 333 requests the profile managing section 31 to send an independent Layer-3 profile corresponding to the Layer-3 service, and then receives an independent Layer-3 profile response from the profile managing section 31. In this case, the service basic processing section 333 sets the previously obtained IP address and port number in the condition of the independent Layer-3 profile, and then transmits its independent Layer-3 profile to the service basic processing section 23 (Fig.2) of the edge device 2 (S2112 and S2113).

Furthermore, when the service control device 3 transmits the independent Layer-3 profile like the second embodiment, it selects the IP address of the edge device 5 from the IP address of the communication partner 6, and then transmits an independent Layer-3 profile to the IP address (S2112 and s2113).

The service basic processing section 333 receives an independent Layer-3 profile reception notice responding to the independent Layer-3 profile transmission, and then creates a packet from Layer-7 information according to whether Layer-3 service is applied or not, and transmits a packet transmission request to the communication processing section 34 (S2115 and S2116).

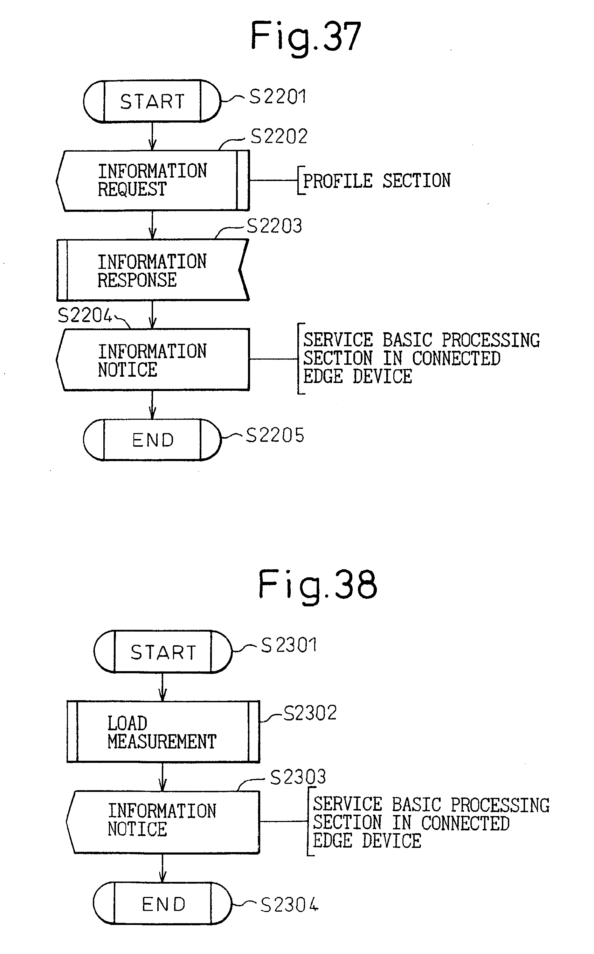

Fig.37 shows a control flow of the service basic processing section 333 in case of notifying the number of Layer-7 profiles and the number of users registered in the Layer-7 profiles. The service basic processing section 333 requests information about the number of Layer-7 profiles and number of the users to the profile managing section 31, and obtains the information (S2202 and S2203). The information obtained by the service basic processing section 333 of the tightly edge-coupled service control device 3 is notified to the service basic processing section 23 (Fig.2) of the edge device 2 which is connected with the tightly edge-coupled service control device 3, and the information obtained by the service basic processing section 333 of the loosely edge-coupled service control device 3 is notified to the service control device managing section 424 of the authentication server device 4 (S2204).

Fig.38 shows a control flow of the service basic processing section 333 in case of notifying load information. This control flow corresponds to the flow of notifying load state in the first embodiment. The service basic processing section 333 measures the processing load of the service control device 3 of its own (S2302). The load information measured by the service basic processing section 333 of the tightly edge-coupled service control device 3 is notified to the service basic processing section 23 (Fig.2) of the edge device 2 which is connected with the tightly edge-coupled service control device 3, and the load information measured by the service basic processing section 333 of the loosely edge-coupled service control device 3 is notified to the service control device managing section 424 of the authentication server device 4 (S2303).

Each of the operations shown in Figs.37 and 38 is common to a tightly edge-coupled service control device and a loosely edge-coupled service control device. The operations may be executed periodically and information (number) obtained may be notified at every execution, or the information may be notified only when the latest number is larger than the previous number by a certain quantity or ratio.

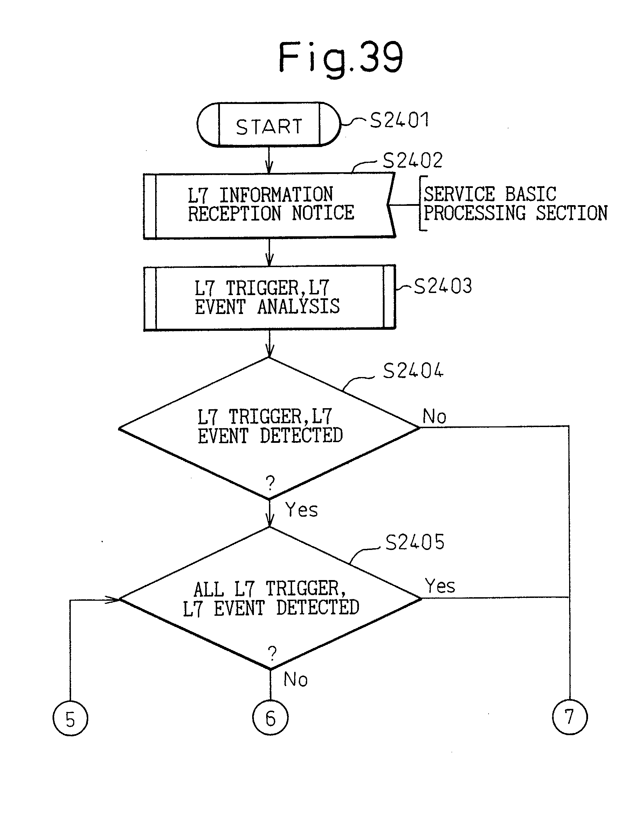

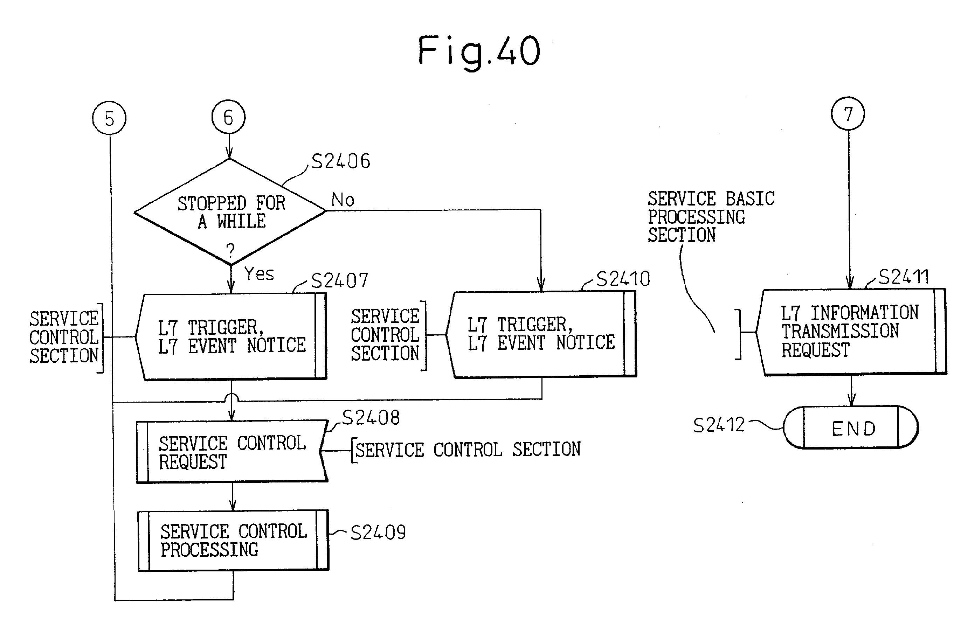

Figs.39 and 40 show a control flow of the service switching section 332. This operation is common to a tightly edge-coupled service control device and a loosely edge-coupled service control device. The service switching section 332 receives Layer-7 information notice from the service basic processing section 333, and then analyzes a Layer-7 trigger and/or a Layer-3 event, and determines whether the service switching section 332 has detected a Layer-7 trigger and/or a Layer-3 event (S2402 to 2404).

When the service switching section 332 has not detected a Layer-7 trigger and/or a Layer-7 event, it transmits Layer-7 information transmission request to the service basic processing section 333 (S2404 and S2411). On the contrary, when the service switching section 332 has detected a Layer-7 trigger and/or a Layer-7 event, it performs the following processing about all of the detected Layer-7 triggers and Layer-7 events, and after it has completed the processing, it transmits a Layer-7 information transmission request to the service basic processing section 333 (S2405).

The service switching section 332 determines whether it should stop the processing until it receives a control command from the service control section 331 after notifying a Layer-7 trigger or a Layer-7 event to the service control section 331 (S2406). When it is necessary to stop the processing for a while, the service switching section 332 notifies a Layer-7 trigger or a Layer-7 event to the service control section 331, and is in a standby state until receiving a service control request from the service control section 331 (s2407).

After that, the service switching section 332 receives a corresponding service control request from the service control section 331, and then performs necessary processing in accordance with the request. When a Layer-7 event to be notified to the service control section 331 is designated, the service switching section 332 stores the Layer-7 event (S2408 and S2409).

When it is not necessary to stop the processing for a while, the service switching section 332 notifies a Layer-7 trigger or a Layer-7 event to the service control section 331, and determines if there are the other Layer-7 triggers and/or Layer-7 events to be detected (S2405). In any of the above both cases, the service switching section 332 determines whether a service control section 331 to which a Layer-7 trigger or Layer-7 event is notified is the service control section 331 of the service control device (tightly edge-coupled service control device or loosely edge-coupled service control device) in which the service switching section 332 is provided, or the service control section 331 of another service control device (function-dependent service control device), and then notifies the Layer-7 trigger or Layer-7 event to the selected service control section 331.

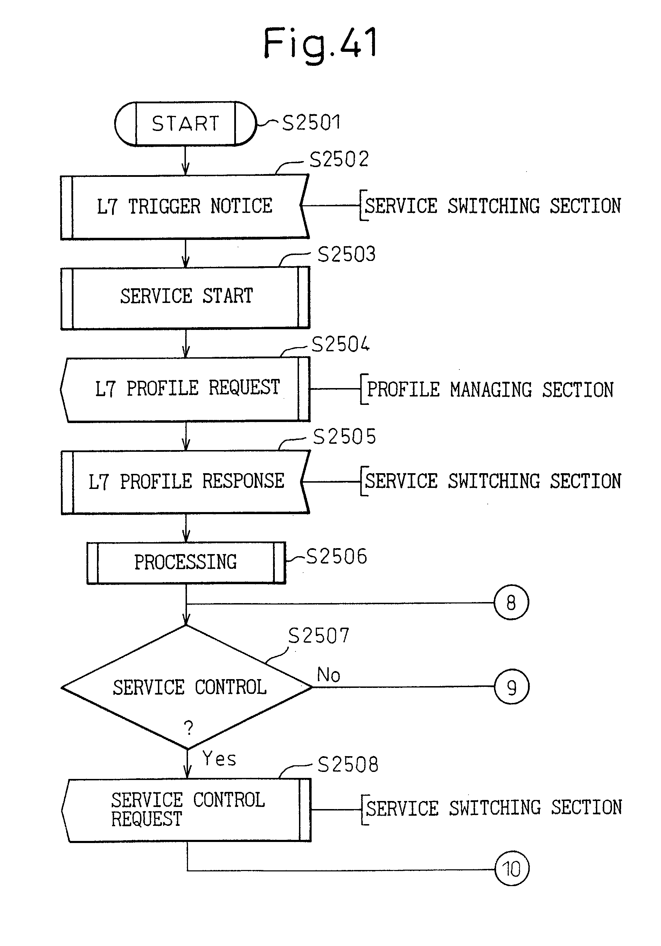

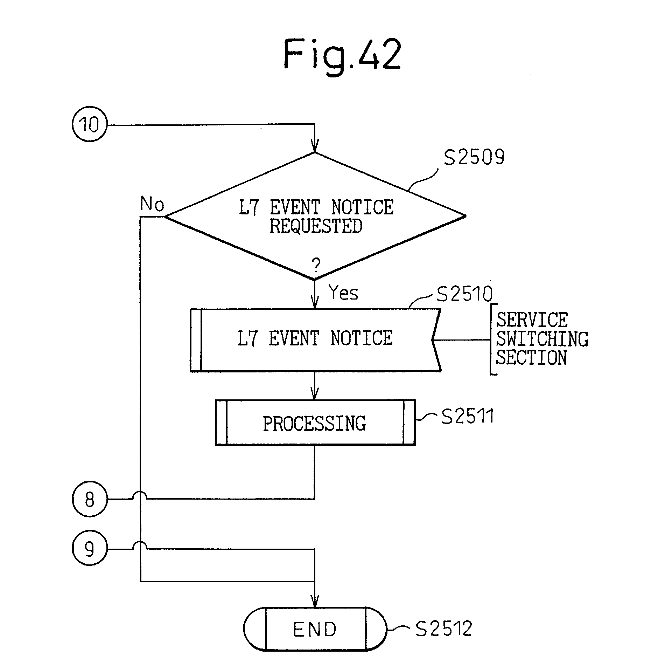

Figs.41 and 42 show a control flow of the service control section 331. This operation is common to a tightly edge-coupled service control device and a loosely edge-coupled service control device. The service control section 331 receives a Layer-7 trigger notice from the service switching section 332 of the service control device in which the service control section 331 is provided, or the service switching section 332 of another service control device, and then starts service for processing the Layer-7 trigger (S2502 and S2503).

The service control section 331 transmits a Layer-7 profile request to the profile managing section 31 to receive a response responding to the request, and then performs processing corresponding to the service while referring to the received Layer-7 profile (S2504 to S2506). Next, the service control section 331 determines whether it transmits a service control request to the service switching section 332. In the case that it does not transmit a service control request, it stops the processing (S2507 and S2512).

On the contrary, in the case that it transmits a service control request, it transmits one or more service control requests to the service switching section 332 (S2508). In the case that it has transmitted a Layer-7 event notice request as a service control request to the service switching section 332, it receives a Layer-7 event notice from the service switching section 332 and performs processing corresponding to the service (S2509 to S2511). On the other hand, in the case that it has transmitted no Layer-7 event notice request, it stops the processing (S2509 and S2512).

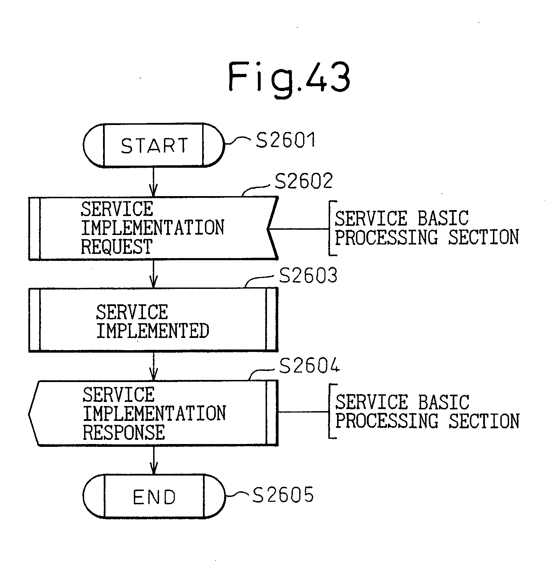

Fig.43 shows a control flow of the service implementing section 334. This control flow is identical with that of the service implementing section 82 of the service implementing server device 8 independent from others. The service implementing section 334 receives a service implementation request from the service basic processing section 333 and implements the requested service, and then transmits the result of the implementation to the service basic processing section 333 by a service implementation response (S2602 to S2604).

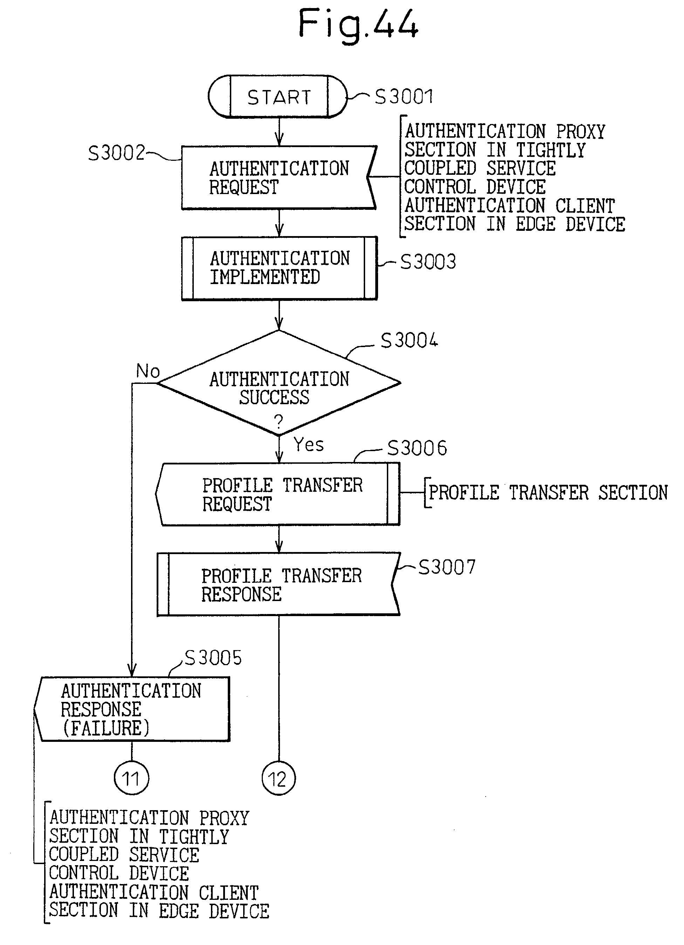

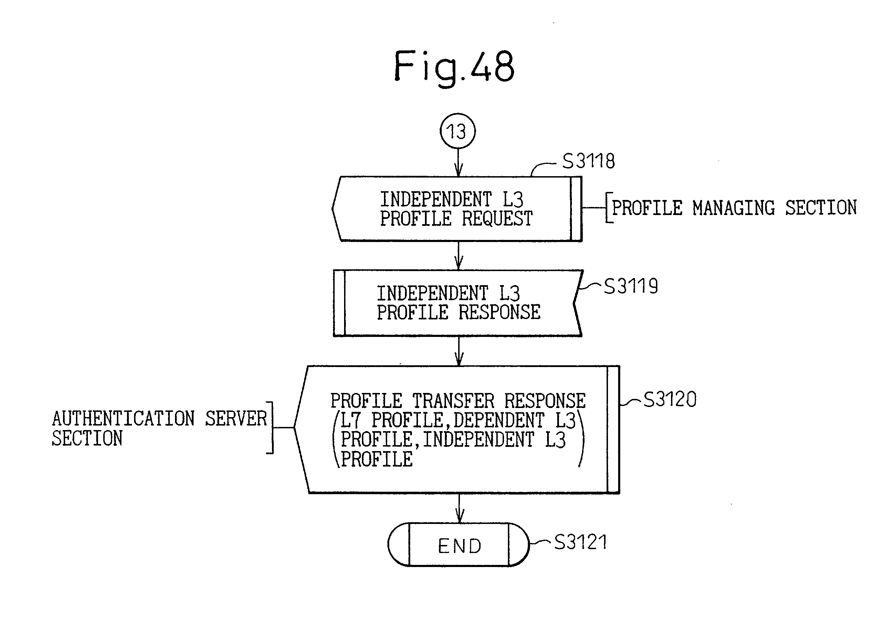

Figs.44 to 52 show a control flows of the functional sections of an authentication server device 4 according to the present invention. Regarding the functional sections, refer to Fig.3.

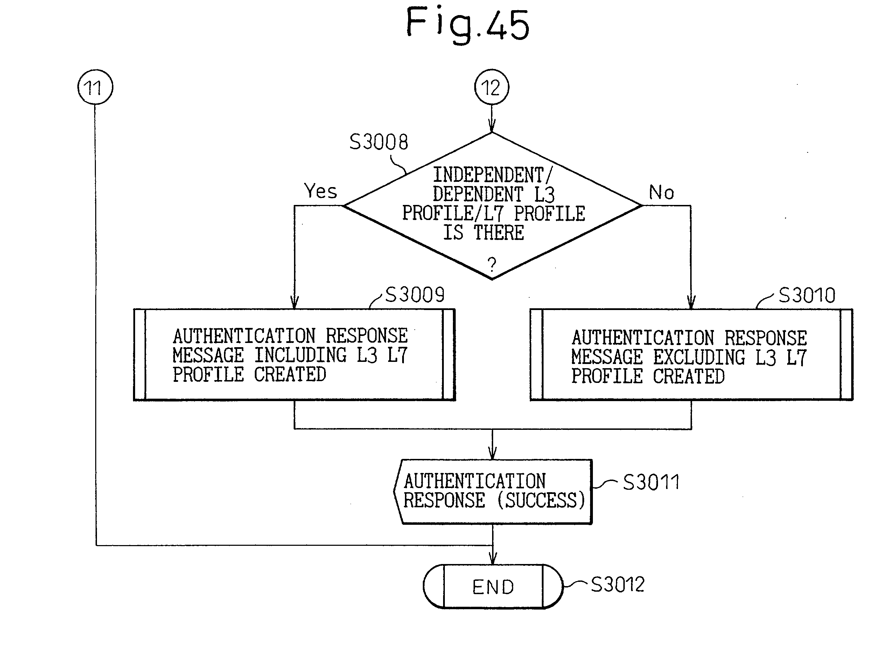

Figs.44 and 45 show a control flow of the authentication server section 421. The authentication server section 421 receives an authentication request message from the authentication proxy section 32 of the tightly edge-coupled service control device 3, or the authentication client section 25 (Fig.2) of the edge device 2, and then performs the authentication processing (S3002 and S3003).

Next, the authentication server section 421 determines whether the authentication has succeeded or not. In the case that the authentication has failed, it transmits a response message indicating the failure of the authentication to the source of the authentication request (S3005). In case that the authentication has succeeded, it transmits a profile transfer request to the profile transferring section 423 to receive a profile transfer response responding to the request (S3006 and S3007). In this case, it determines whether the received response includes a Layer-3 profile and/or a Layer-7 profile.

In the case that the received response includes a Layer-3 profile and/or Layer-7 profile, it creates an authentication response including the Layer-3 profile and/or Layer-7 profile, and in the case that the received response does not include a Layer-3 profile and Layer-7 profile, it creates an authentication response not including a Layer-3 profile or a Layer-7 profile. After that, the authentication server section 421 transmits a response message of authentication success including the authentication response to the source of the authentication request (S3009 to S3011).

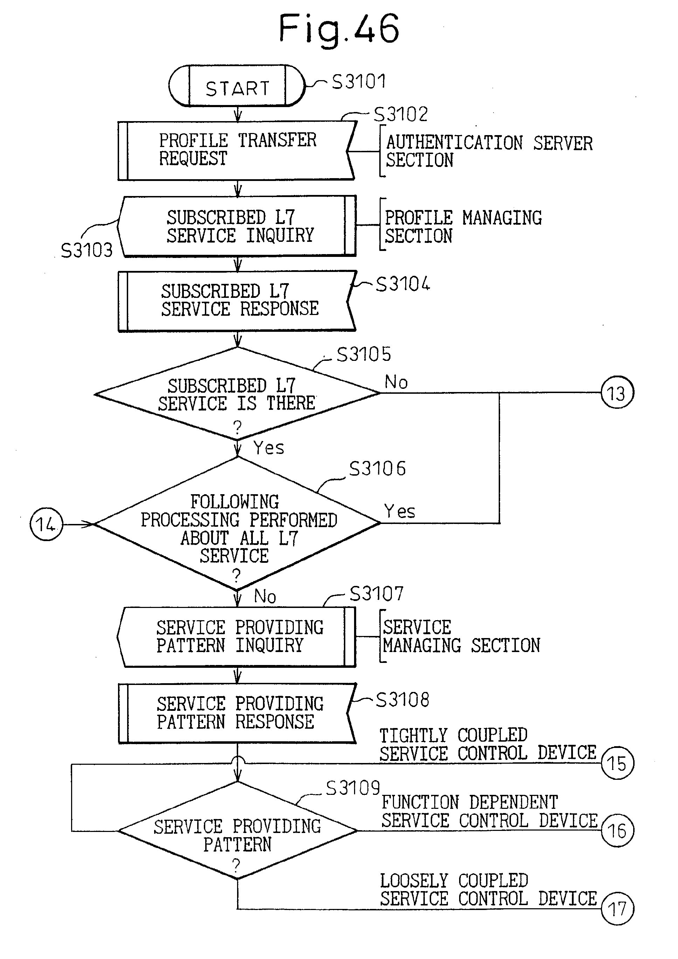

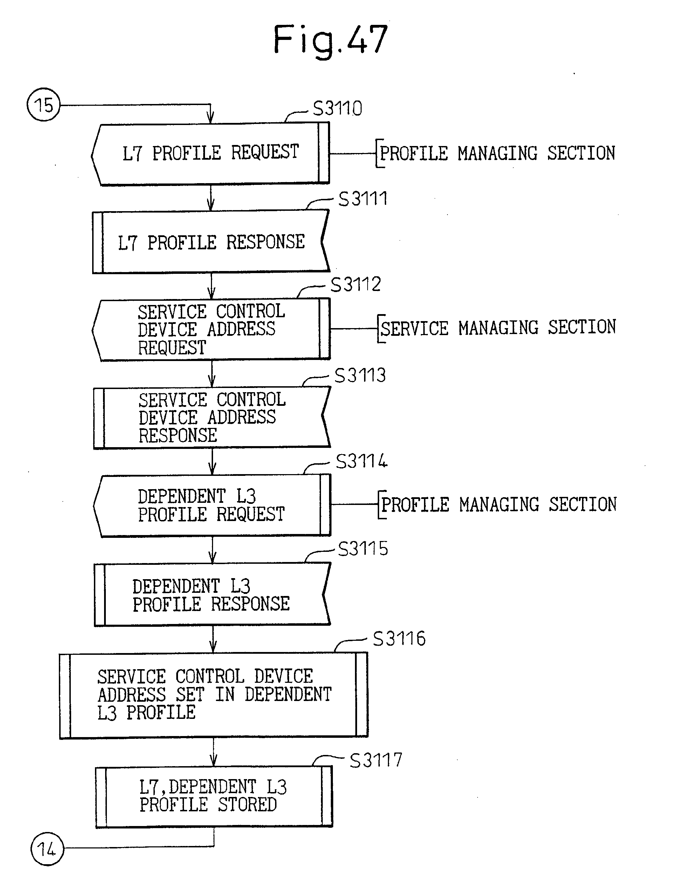

Figs.46 to 51 show a control flow of the profile transferring section 423. In Figs.46 and 47, the profile transferring section 423 receives a profile transfer request from the authentication server section 421, and then transmits an inquiry about Layer-7 service to which a user to be authenticated has subscribed to the profile managing section 422, and receives an response responding to the request (S3102 to S3104). The profile transferring section 423 determines whether there is a Layer-7 service to which the user has subscribed, based on the response (S3105). In case that there is no Layer-7 service to which the user has subscribed, the profile transferring section 423 transmits an independent Layer-3 profile request to the profile managing section 422 to receive an independent Layer-3 profile response (S3118 and S3119). At that time, when there is a Layer-7 profile which has been stored or created and its dependent Layer-3 profile and independent Layer-3 profile, the profile transferring section 423 transmits a profile transfer response, including them, to the authentication server section 421 (S3120).

On the other hand, when there is a Layer-7 service to which the user has subscribed, the profile transferring section 423 performs the following procedure regarding all of the Layer-7 services to which the user has subscribed (S3106). After performing the procedure, it transmits a profile transfer response to the authentication server section 421 by the same processing as that performed in the case that there is no Layer-7 service to which the user has subscribed (S3118 to S3120).

At first, the profile transferring section 423 transmits an inquiry of a service providing pattern to the service managing section 422 to receive its response (S3107 and S3108). The profile transferring section 423 determines that the service control device indicated by the response is either the tightly edge-coupled service control device 3-1, the loosely edge-coupled service control device 3-2 or the function-dependent service control device 3-3 (S3109).

In the case of the tightly edge-coupled service control device 3-1, the profile transferring section 423 transmits the request for the Layer-7 profile of an authenticated user concerned to the profile managing section 422 to receive its response (S3110 and S3111). Furthermore, the profile transferring section 423 transmits an inquiry about the reception address of Layer-7 service concerned of the tightly edge-coupled service control device 3-1 providing Layer-7 service concerned to the service managing section 422 to receive its response (S3112 and S3113).

Furthermore, the profile transferring section 423 transmits a dependent Layer-3 profile request to the profile managing section 422 in order to obtain the dependent Layer-3 profile of Layer-7 service concerned to receive its response (S3114 and S3115). Next, it sets the packet transfer destination of the obtained dependent Layer-3 profile to the aforementioned Layer-7 service reception address of the tightly edge-coupled service control device 3-1, and then stores the obtained or created Layer-7 profile and its dependent Layer-3 profile (S3116 and S3117).

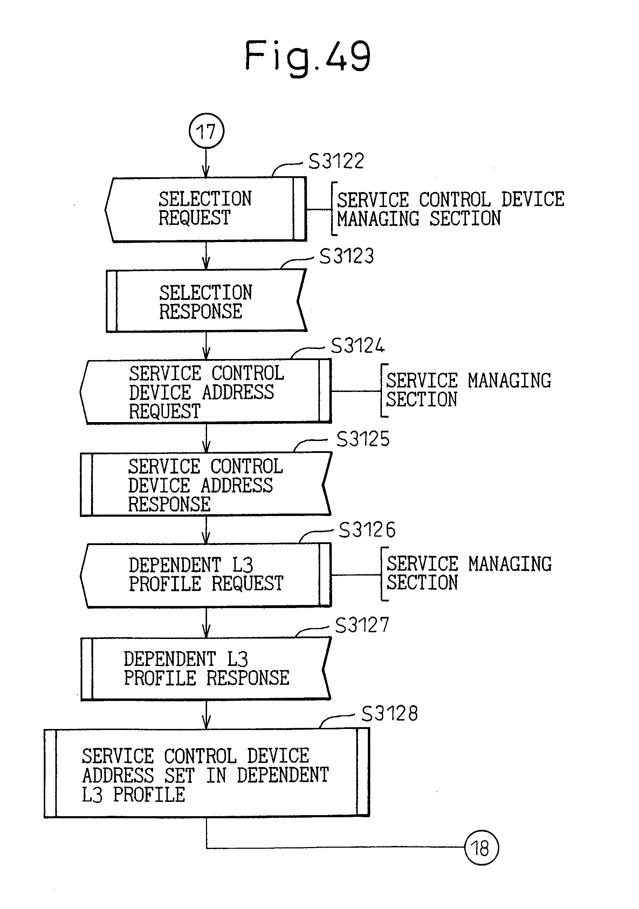

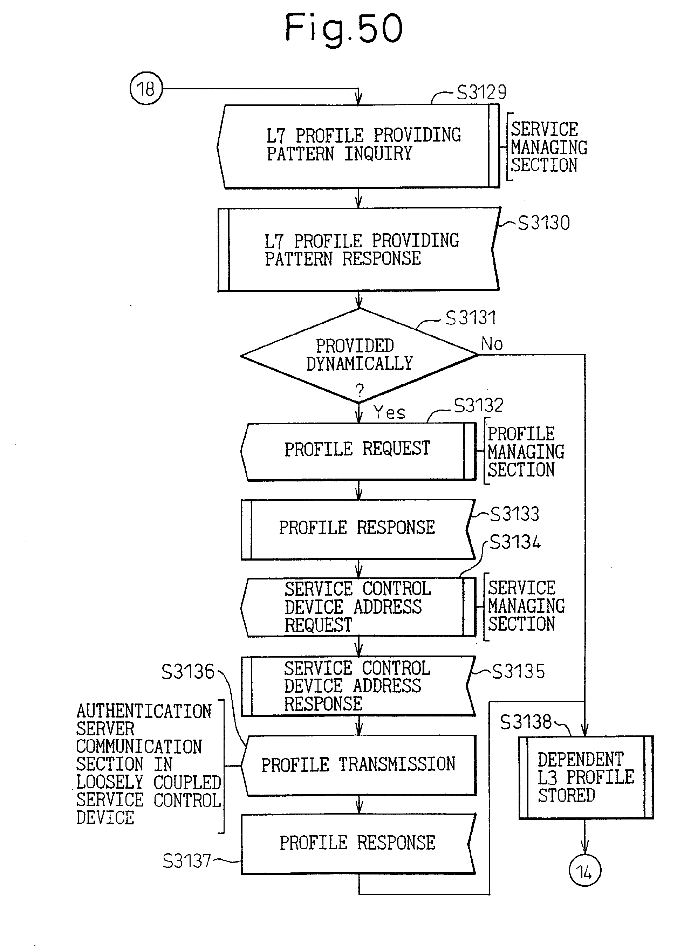

In the case of the loosely edge-coupled service control device 3-2, the profile transferring section 423 transmits a request of selecting the loosely edge-coupled service control device 3-2 to the service control device managing section 424 to receive its response as shown in Figs.49 and 50 (S3122 and S3123). Further, it transmits an inquiry of the reception address of Layer-7 service concerned of the service control device for the Layer-7 service concerned to the service managing section 422 to receive its response (S3124 and S3125).

Furthermore, it transmits a dependent Layer-3 profile request to the profile managing section 422 to receive its response in order to obtain the dependent Layer-3 profile of Layer-7 service concerned (S3126 and S3127). Next, it sets the packet transfer destination of the obtained dependent Layer-3 profile to the aforementioned Layer-7 service reception address of the loosely edge-coupled service control device 3-2 (S3128).

Next, the profile transferring section 423 transmits an inquiry for the Layer-7 profile providing pattern for a Layer-7 service concerned to the service managing section 422 to receive its response (S3129 and S3130). The profile transferring section 423 determines whether the Layer-7 profile is provided dynamically or not. In the case that the Layer-7 profile is provided statically, it stores the obtained or created dependent Layer-3 profile (S3131 and S3138). On the other hand, in the case that the Layer-7 profile is provided dynamically, it transmits a request for the Layer-7 profile of an authenticated user concerned to the profile managing section 422 to receive its response (S3131 to s3133).

Furthermore, the profile transferring section 423 transmits a request of the IP address of the loosely edge-coupled service control device 3-2 to which the Layer-7 profile is transferred, to the service managing section 422 to receive its response (S3134 and S3135). The IP address is used for the profile transferring section 423 to communicate with the authentication server communication section 37 of the loosely edge-coupled service control device 3-2. Using this address, the profile transferring section 423 transfers the Layer-3 profile and Layer-7 profile to the authentication server communication section 37 of the loosely edge-coupled service control device 3-2 to receive its transfer response (S3136 and S3137). The profile transferring section 423 stores the obtained or created dependent Layer-3 profile (S3138).

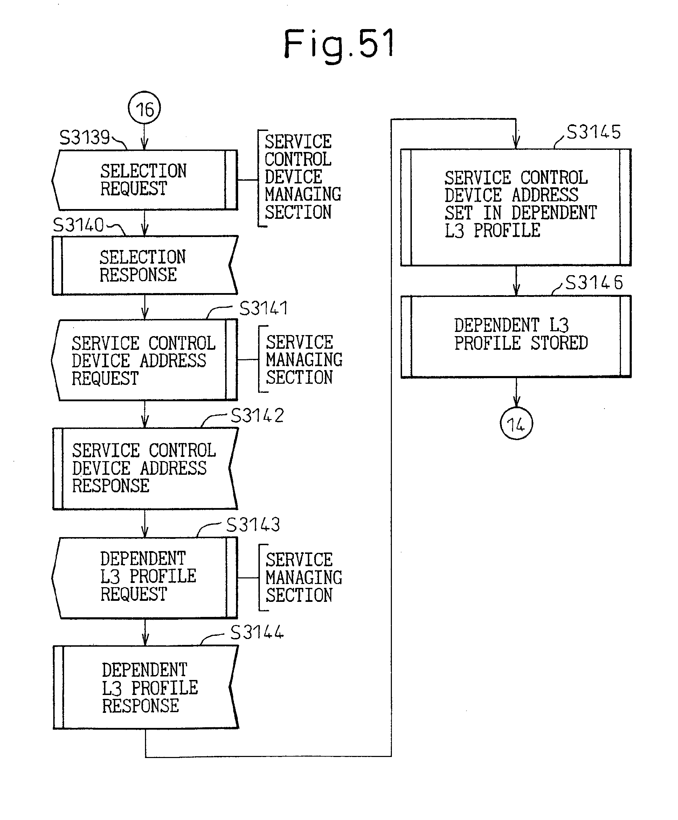

In the case of the function-dependent service control device 3-3, the profile transferring section 423, as shown in Fig.51, transmits a request of selecting the tightly edge-coupled service control device 3-1 or the loosely edge-coupled service control device 3-2, either of which is capable of connecting with the function-dependent service control device, to receive its selection response (S3139 and S3140). Next, the profile transferring section 423 transmits an inquiry of the reception address of Layer-7 service of the selected service control device to the service managing section 422 to receive its response (S3141 and S3142).

Further, the profile transferring section 423 transmits a dependent Layer-3 profile request to the profile managing section 422 to receive its response in order to obtain the dependent Layer-3 profile of Layer-7 service concerned (S3143 and S3144). The profile transferring section 423 sets the packet transfer destination of the dependent Layer-3 profile to the Layer-7 service reception address of the selected service control device (S3145). Furthermore, the profile transferring section 423 stores the obtained or created dependent Layer-3 profile (S3146).

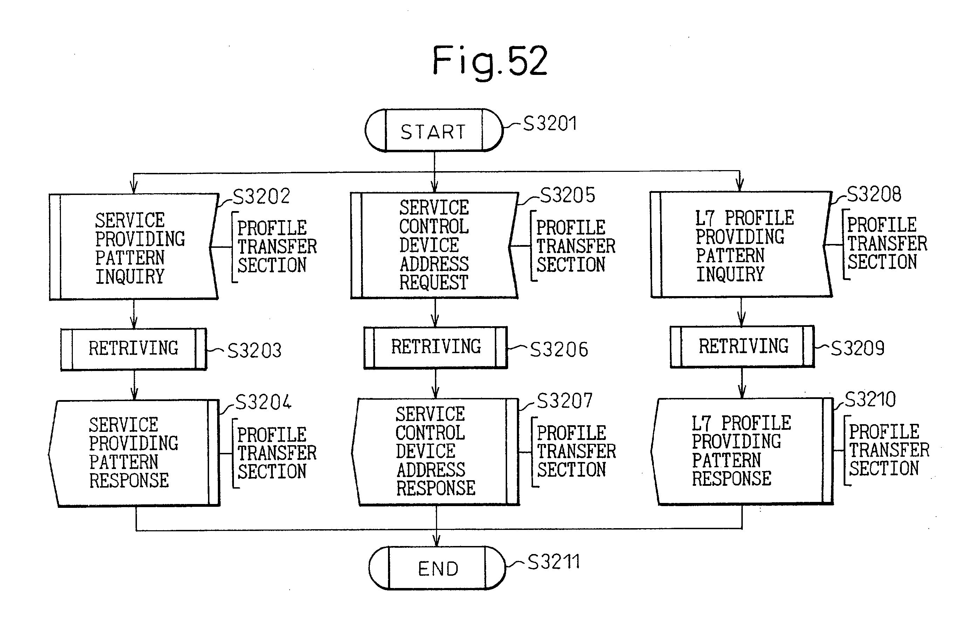

Fig.52 shows a control flow of the service managing section 422. The service managing section 422 receives the inquiry of a service providing pattern from the profile transferring section 423, and then retrieves a service providing pattern for the service corresponding to the inquiry and transmits the retrieved service providing pattern to the profile transferring section 423 (S3202 to S3204). Likewise, the service managing section 422 receives the inquiry of the reception address of Layer-7 service of a service control device 3, and then transmits the Layer-7 service reception address of the service control device to be applied to the profile transferring section 423(S3205 to S3207). It receives the inquiry of the service providing pattern of the Layer-7 profile, and then transmits the service providing pattern of the Layer-7 profile to be applied to the profile transferring section 423 (S3208 to S3210).

As described above, the present invention provides a service control network capable of providing Layer-7 service in addition to conventional Layer-3 service. The service control network allows a mobile user to obtain Layer-7 service through a network to which the user has moved, as though through the home network of the user, without considering the network utilized by the user. Furthermore, the service control network may perform various flexible and efficient content processings under the Layer-7 service environment and allows service providers to enter into a Layer-7 service market easily.

## Claims

1. A service control network comprising:
an authentication server device for performing user authentication;
an edge device for performing Layer-3 service processing for a mobile terminal managed by said edge device; and
a service control device for performing Layer-7 service control for the mobile terminal,
wherein said authentication server device comprises a means for specifying a Layer-7 profile and an associated Layer-3 profile of the mobile terminal at the success of the authentication of the mobile terminal,
the edge device comprising a means for transferring packets, which have been received from the mobile terminal after the success of the authentication of the mobile terminal and match said Layer-3 profile, to said service control device,
the service control device comprising a means for controlling the implementation of a Layer-7 service concerned for packets which have been received from said edge device and match said Layer-7 profile.

2. The service control network of claim 1, wherein said service control device is a tightly edge-coupled service control device which has a logical connection relation with a particular edge device and controls the implementation of a Layer-7 service concerned for a mobile terminal managed by said edge device in conjunction with said edge device.

3. The service control network of claim 2, wherein said tightly edge-coupled service control device comprises an authentication proxy means relaying a control signal for authentication between said edge device and said authentication server device.

4. The service control network of claim 2 or 3, wherein said tightly edge-coupled service control device further comprises a means for notifying the load information of said tightly edge-coupled service control device to said particular edge device in a certain cycle, and
said edge device further comprises a means for selecting an tightly edge-coupled service control device for performing service control based on said load information.

5. The service control network of claim 2, 3 or 4, further comprising a function-dependent service control device for controlling, in conjunction with said tightly edge-coupled service control device, the implementation of a Layer-7 service for mobile terminals managed by an edge device which has a logical connection relation with the service control device.

6. The service control network of any of claims 1 to 5, wherein said service control device is a loosely edge-coupled service control device which is allowed to have a logical connection relation with an optional edge device and controls the implementation of a Layer-7 service for mobile terminals managed by said edge device in conjunction with said edge device.

7. The service control network of claim 6, further comprising a function-dependent service control device for controlling, in conjunction with said loosely edge-coupled service control device, the implementation of a Layer-7 service for mobile terminals managed by an edge device which has a logical connection relation with the service control device.

8. The service control network of any of claims 1 to 7, further comprising a Layer-7 service managing means for managing a Layer-7 profile of each mobile terminal.

9. The service control network of claim 8, wherein said Layer-7 profile includes a Layer-3 profile corresponding to a Layer-7 service concerned, and said edge device performs Layer-3 service processing based on said Layer-3 profile.

10. A control method of a service control network comprising an authentication server device for performing user authentication, an edge device for performing Layer-3 service processing for a mobile terminal managed by said edge device, and a service control device for performing Layer-7 service control for the mobile terminal, wherein:
the mobile terminal transmits an authentication request message to said edge device;
said edge device transmits said authentication request message to said service control device;
said service control device transmits the authentication request message concerned to said authentication server device;
said authentication server device transmits an authentication response message together with a dependent Layer-3 profile and an independent Layer-3 profile related to a Layer-7 profile concerned at the success of the authentication of the mobile terminal;
said service control device caches a Layer-7 profile of said authentication response message and an independent Layer-3 profile of another edge device which will be a communication partner of said service control device;
said edge device caches an independent Layer-3 profile and/or a dependent Layer-3 profile of said edge device of said authentication response message;
said edge device performs Layer-3 service processing for packets which have been received from the mobile terminal and match the independent Layer-3 profile, and transfers packets, which have been received from the mobile terminal and match the dependent Layer-3 profile, to said service control device; and
said service control device transfers the independent Layer-3 profile to said another edge device, and controls the implementation of a Layer-7 service concerned for packets which have been received from said edge device and match the Layer-7 profile.

11. The control method of claim 10, wherein:
said service network control device further comprises a service implementing server device; and
said service control device requests said service implementing server device to perform Layer-7 service processing of packets matching the Layer-7 profile.
